(19) Europäisches Patentamt
European Patent Office
Office européen des brevets

(11) EP 4 648 335 A1

(12) **EUROPEAN PATENT APPLICATION**
published in accordance with Art. 153(4) EPC

(43) Date of publication:
**12.11.2025 Bulletin 2025/46**

(21) Application number: **23947848.0**

(22) Date of filing: **04.08.2023**

(51) International Patent Classification (IPC):
***H04L 5/00*** *(2006.01)*

(52) Cooperative Patent Classification (CPC):
**H04L 5/00**

(86) International application number:
**PCT/CN2023/111226**

(87) International publication number:
**WO 2025/030261 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHANG, Shichang**
**Dongguan, Guangdong 523860 (CN)**

(74) Representative: **Penza, Giancarlo**
**Bugnion S.p.A.**
**Viale Lancetti, 17**
**20158 Milano (IT)**

# (54) METHOD FOR WIRELESS COMMUNICATION, AND TERMINAL DEVICE

(57) Provided are a method for wireless communication, and a terminal device. The method comprises: a terminal device sending or receiving a first PSSCH in a first slot, wherein the first slot is also used for transmitting a first reference signal, and the first reference signal is used for sidelink positioning. In the embodiments of the present application, a terminal device can transmit, in a slot for transceiving other sidelink information, a reference signal (i.e., a first reference signal) which is used for sidelink positioning, that is, resources for the first reference signal and resources for the other sidelink information share a resource pool, so as to implement sidelink positioning.

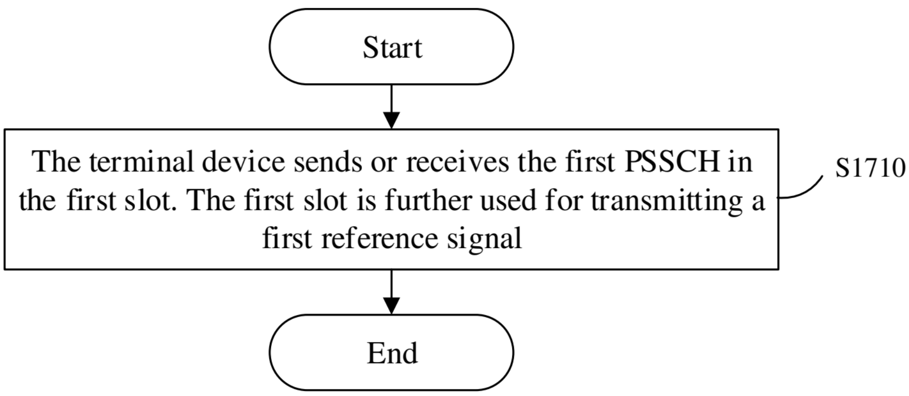


FIG. 17

EP 4 648 335 A1

## Description

### TECHNICAL FIELD

The present disclosure relates to the technical field of communication, and in particular, to a method and a terminal device for wireless communication.

### BACKGROUND

In some communication systems (such as new radio (NR) system), sidelink-based positioning is introduced to enhance positioning techniques. How to determine a resource for a reference signal for sidelink positioning, such as a sidelink positioning reference signal (SL PRS), is a problem that needs to be solved.

### SUMMARY

The present disclosure provides a method and a terminal device for wireless communication. Various aspects of the present disclosure are described below.

In the first aspect, a method for wireless communication is provided. The method includes the following operation. A terminal device sends or receives the first physical sidelink shared channel (PSSCH) in the first slot. The first slot is further used for transmitting the first reference signal, and the first reference signal is used for sidelink positioning.

In the second aspect, a terminal device is provided. The terminal device includes a transceiver module. The transceiver module is configured to send or receive the first PSSCH in the first slot. The first slot is further used for transmitting the first reference signal, and the first reference signal is used for sidelink positioning.

In the third aspect, a terminal device is provided. The terminal device includes a processor, a memory and a communication interface. The memory is configured to store one or more computer programs, and the processor is configured to invoke the computer programs in the memory to cause the communication device to perform part or all of the operations in the method of the first aspect.

In the fourth aspect, the embodiments of the present disclosure provide a communication system. The system includes the above terminal device. In another possible design, the system may further include other devices that interact with the terminal device in the solutions provided by the embodiments of the present disclosure.

In the fifth aspect, the embodiments of the present disclosure provide a computer readable storage medium. The computer readable storage medium stores a computer program that causes a terminal device to perform part or all of the operations in the method of the above aspects.

In the sixth aspect, the embodiments of the present disclosure provide a computer program product. The computer program product includes a non-transitory computer readable storage medium storing a computer program. The computer program is operated to cause a terminal device to perform part or all of the operations in the method of the above aspects. In some implementations, the computer program product may be a software installation package.

In the seventh aspect, the embodiments of the present disclosure provide a computer program. The computer program is operated to cause a communication device to perform part or all of the operations in the method of the above aspects.

In the eighth aspect, the embodiments of the present disclosure provide a chip. The chip includes a memory and a processor. The processor may invoke and execute a computer program from a memory to implement part or all of the operations in the method of the above aspects.

In the embodiments of the present disclosure, the terminal device may transmit a reference signal (i.e., the first reference signal) for sidelink positioning in a slot for sending and receiving other sidelink information, that is, the resource for the first reference signal shares a resource pool with the resource for other sidelink information, to realize sidelink positioning.

### BRIEF DESCRIPTION OF THE DRAWINGS

FIG. 1 is an example diagram of a system architecture of a wireless communication system to which the embodiments of the present disclosure may be applied.

FIG. 2 is an example diagram of a scenario of sidelink communication within network coverage.

FIG. 3 is an example diagram of a scenario of sidelink communication within a part of network coverage.

FIG. 4 is an example diagram of a scenario of sidelink communication outside network coverage.

FIG. 5 is an example diagram of a scenario of sidelink communication based on a central control node.
FIG. 6 is an example diagram of a broadcast-based sidelink communication method.
FIG. 7 is an example diagram of a unicast-based sidelink communication method.
FIG. 8 is an example diagram of a multicast-based sidelink communication method.
FIG. 9 is an example diagram of a slot structure of a sidelink communication system.
FIG. 10 is an example diagram of a structure of the second-stage SCI in a slot.
FIG. 11 is an example diagram of time domain positions of physical sidelink control channel demodulation reference signal (PSCCH DMRS) symbols in a slot.
FIG. 12 is an example diagram of a single-symbol DMRS frequency domain type 1.
FIG. 13 is an example diagram of resources for transmitting downlink positioning reference signal (DL PRS).
FIG. 14 is a schematic diagram of a structure of interleaved resource blocks.
FIG. 15 is an example diagram of a frame structure of a sidelink over unlicensed spectrum (SL-U) system.
FIG. 16 is an example diagram of resource block (RB) sets.
FIG. 17 is a schematic flowchart of a method for wireless communication according to an embodiment of the present disclosure.
FIG. 18 is a schematic structural diagram of a terminal device according to an embodiment of the present disclosure.
FIG. 19 is a schematic structural diagram of a communication apparatus according to an embodiment of the present disclosure.

DETAILED DESCRIPTION

Hereinafter, technical solutions in the present disclosure will be described with reference to the accompanying drawings.

## Communication system architecture

FIG. 1 is an example diagram of a system architecture of a wireless communication system 100 to which the embodiments of the present disclosure may be applied. The wireless communication system 100 may include a network device 110 and a terminal device 120. The network device 110 may be a device in communication with the terminal device 120. The network device 110 may provide communication coverage for a particular geographic area and may communicate with the terminal device 120 located within the coverage area.

FIG. 1 exemplarily illustrated a network device and a terminal device. Alternatively, the wireless communication system 100 may include one or more network devices 110 and/or one or more terminal devices 120. For one network device 110, the one or more terminal devices 120 may all be located within the network coverage range of the network device 110, or may all be located outside the network coverage range of the network device 110, or may be located partially within the coverage range of the network device 110, and the other part may be located outside the network coverage range of the network device 110, which is not limited in the embodiments of the present disclosure.

Alternatively, the wireless communication system 100 may further include other network entities such as a network controller and a mobility management entity, which is not limited in the embodiments of the present disclosure.

It should be understood that the technical solutions of the embodiments of the present disclosure may be applied to various communication systems, such as a 5th generation (5G) system or a new radio (NR) system, a long term evolution (LTE) system, an LTE frequency division duplex (FDD) system, an LTE time division duplex (TDD), and the like. The technical solutions provided in the present disclosure may also be applied to future communication systems, such as a sixth generation mobile communication system, a satellite communication system, and the like.

The terminal device in the embodiments of the present disclosure may also be referred to as user equipment (UE), an access terminal, a subscriber unit, a subscriber station, a mobile stage, a mobile station (MS), a mobile terminal (MT), a remote station, a remote terminal, a mobile device, a user terminal, a terminal, a wireless communication device, a user agent, or a user device. The terminal device in the embodiments of the present disclosure may be a device that provides voice and/or data connectivity to a user, and may be used to connect people, objects, and machines, for example, a handheld device having a wireless connection function, a vehicle-mounted device, or the like. The terminal device in the embodiments of the present disclosure may be a mobile phone, a tablet computer (Pad), a laptop computer, a handheld computer, a mobile internet device (MID), a wearable device, a virtual reality (VR) device, a augmented reality (AR) device, a wireless terminal in an industrial control, a wireless terminal in an self driving, a wireless terminal in a remote medical surgery, a wireless terminal in a remote grid, a wireless terminal in a transportation safety, a wireless terminal in a smart city, a wireless terminal in a smart home, or the like. Alternatively, the UE may be used to act as a base station. For example, a UE may act as a scheduling entity that provides sidelink signals between UEs in V2X or D2D, etc. For example, a cellular telephone communicates with an automobile by using sidelink signals. The cellular telephone communicates with a smart home device without relaying a communication signal through the base station.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that connects the terminal device to the wireless network. The base station may generally cover the following various names, or may be replaced with the following various names, for example, a NodeB, an evolved NodeB (eNB), a next generation NodeB (gNB), a relay station, an access point, a transmitting and receiving point (TRP), a transmitting point (TP), a master station (MeNB), a secondary station (SeNB), an multistandard radio (MSR) node, a home base station, a network controller, an access point, a wireless point, a access point (AP), a transmitting node, a sending-receiving node, a base band unit (BBU), a Remote Radio Unit (RRU), an active antenna unit (AAU), an remote radio head (RRH), a central unit (CU), a distributed unit (DU), a location node, and the like. The base station may be a macro base station, a micro base station, a relay node, a donor node, or the like, or a combination thereof. The base station may also refer to a communication module, modem, or chip for disposal within the above device or apparatus. The base station may also be a mobile switching center, a device that assumes a base station function in device-to-device (D2D), a vehicle-to-everything (V2X), a machine-to-machine (M2M) communication, a network-side device in a 6G network, a device that assumes a base station function in a future communication system, or the like. The base stations may support networks of the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present disclosure may refer to a CU or a DU, or the network device includes a CU and a DU. The gNB may also include an AAU.

The network device and the terminal device may be deployed on land, including indoor or outdoor, handheld or vehicle-mounted. They may also be deployed on the water. They may also be deployed on aircraft, balloons and satellites in the air. In the embodiments of the present disclosure, the scenario in which the network device and the terminal device are located is not limited.

It should be understood that all or part of the functionalities of the communication device in the present disclosure may also be implemented by software functionality running on hardware, or by virtualization functionality instantiated on a platform (such as a cloud platform).

## Sidelink Communication under Different Network Coverage

Sidelink communication refers to a sidelink-based communication technology. Sidelink communication may be, for example, device-to-device (D2D) or vehicle-to-everything (V2X) communication. In the traditional cellular system, communication data is received or sent between the terminal device and the network device, while sidelink communication supports direct transmission of communication data between the terminal device and the terminal device. Compared with traditional cellular communication, the direct transmission of communication data between the terminal device and the terminal device may have higher spectral efficiency and lower transmission delay. For example, the Internet of Vehicles system uses the sidelink communication technology.

In the sidelink communication, the sidelink communication may be classified into sidelink communication within the network coverage, sidelink communication within a part of network coverage, and sidelink communication outside the network coverage according to the situation of the network coverage in which the terminal device is located.

FIG. 2 is an example diagram of a scenario of sidelink communication within network coverage. In the scenario illustrated in FIG. 2, two terminal devices 120a are within the coverage range of the network device 110. Therefore, both terminal devices 120a may receive the configuration signaling (the configuration signaling in the present disclosure may also be replaced with configuration information) of the network device 110, and determine the sidelink configuration according to the configuration signaling of the network device 110. After both terminal devices 120a are configured for the sidelink, the sidelink communication may be performed on the sidelink.

FIG. 3 is an example diagram of a scenario of sidelink communication within a part of network coverage. In the scenario illustrated in FIG. 3, the terminal device 120a performs sidelink communication with the terminal device 120b. Since the terminal device 120a is located within the coverage range of the network device 110, the terminal device 120a can receive the configuration signaling of the network device 110 and determine the sidelink configuration according to the configuration signaling of the network device 110. The terminal device 120b is located outside the network coverage range and cannot receive the configuration signaling of the network device 110. In this case, the terminal device 120b may determine the sidelink configuration according to the pre-configuration information and/or information carried in the physical sidelink broadcast channel (PSBCH) sent by the terminal device 120a located within the network coverage range. After both the terminal device 120a and the terminal device 120b are configured for the sidelink, the sidelink communication may be performed on the sidelink.

FIG. 4 is an example diagram of a scenario of sidelink communication outside network coverage. In the scenario illustrated in FIG. 4, both terminal devices 120b are located outside network coverage range. In this case, both terminal devices 120b may determine the sidelink configuration according to the pre-configuration information. After both terminal devices 120b are configured for the sidelink, the sidelink communication may be performed on the sidelink.

## Sidelink communication based on central control node

FIG. 5 is an example diagram of a scenario of sidelink communication based on a central control node. In the scenario of sidelink communication, multiple terminal devices may form a communication group, and the communication group includes a central control node. The central control node may be a terminal device (such as terminal device 1 in FIG. 5) in the communication group, and this terminal device may also be referred to as a cluster header (CH) terminal device. The central control node may be responsible for completing one or more of the following functions: establishing a communication group, joining and leaving of a group member of the communication group, coordinating resources in the communication group, allocating sidelink transmission resources for other terminal devices, receiving sidelink feedback information of other terminal devices, and coordinating resources with other communication groups.

## Data transmission method of sidelink communication

Some sidelink communication systems (such as long term evolution vehicle to everything (LTE-V2X)) support the broadcast-based data transmission method (hereinafter, which is referred to as broadcast transmission). For the broadcast transmission, the receiving terminal may be any one terminal device around the sending terminal. Taking FIG. 6 as an example, the terminal device 1 is a sending terminal, and the receiving terminal corresponding to the sending terminal is any one terminal device around the terminal device 1, and may be, for example, any one of the terminal device 2 to the terminal device 6 in FIG. 6.

In addition to broadcast transmission, some communication systems support unicast-based data transmission method (hereinafter, which is referred to as unicast transmission) and/or multicast-based data transmission method (hereinafter, which is referred to as multicast transmission). For example, the new radio vehicle to everything (NR-V2X) hopes to support autonomous driving. The autonomous driving puts forward higher requirements for data interaction between vehicles. For example, data interaction between vehicles requires higher throughput, lower latency, higher reliability, greater coverage range, more flexible resource allocation methods, etc. Therefore, in order to improve the data interaction performance between vehicles, unicast transmission and multicast transmission are introduced in the NR-V2X.

For the unicast transmission, there is generally only one receiving terminal. Taking FIG. 7 as an example, unicast transmission is performed between the terminal device 1 and the terminal device 2. The terminal device 1 may be a sending terminal, and the terminal device 2 may be a receiving terminal, or the terminal device 1 may be a receiving terminal, and the terminal device 2 may be a sending terminal.

For the multicast transmission, the receiving terminal may be a terminal device within a communication group, or the receiving terminal may be a terminal device within a certain transmission distance. Taking FIG. 8 as an example, the terminal device 1, the terminal device 2, the terminal device 3, and the terminal device 4 constitute one communication group. If the terminal device 1 sends data, the other terminal devices (the terminal device 2 to the terminal device 4) in the group may all be receiving terminals.

## Slot structure of NR-V2X

The latency in the NR-V2X system is lower than that in he LTE-V2X system. Therefore, the multiplexing method of the physical sidelink control channel (PSCCH) and the physical sidelink shared channel (PSSCH) in the NR-V2X system is redesigned compared to that in the LTE-V2X system. The time domain resource allocation in the NR-V2X takes slots as allocation granularity. Within a slot, the first orthogonal frequency division multiplexing (OFDM) symbol is fixedly used for automatic gain control (AGC). On the AGC symbol, the UE may copy the information sent on the second symbol. One symbol is left at the end of the slot for transition between sending and receiving, which is used for the UE to transition from the sending (or receiving) state to the receiving (or sending) state.

In the NR-V2X system, the PSSCH and the PSCCH associated with the PSSCH are transmitted in the same slot. The PSCCH may occupy 2 or 3 OFDM symbols except the AGC symbol, and the time domain positions of the PSCCH may start from the second time domain symbol (the first time domain symbol is the AGC symbol) among the time domain symbols available for sidelink transmission in the slot.

The number of physical resource blocks (PRBs) occupied by the PSCCH in the frequency domain is configurable. For example, the PSCCH may occupy {10, 12 15, 20, 25} PRBs in the frequency domain. In the frequency domain, the number of PRBs occupied by the PSCCH is within one subband range of the PSSCH. If the number of PRBs occupied by the PSCCH is less than the size of one subchannel of the PSSCH, or the frequency domain resources of the PSSCH includes multiple subchannels, the OFDM symbol in which the PSCCH is located may be frequency division multiplexed by the PSCCH and the PSSCH.

In the NR-V2X system, the parameters *sl-startSLsymbols* and *sl-lengthSLsymbols* may be used to configure the starting point and length of time domain symbols (which is referred to be symbols in short) for sidelink transmission in a slot. The last symbol among the symbols used for sidelink transmission, in one slot, configured by the parameters *sl-startSLsymbols* and *sl-lengthSLsymbols* is used as a guard period (GP). Only the remaining time domain symbols can be used by the PSSCH and PSCCH.

In some embodiments, in the NR-V2X, in addition to PSCCH and PSSCH, a physical sidelink feedback channel (PSFCH) may be present in one sidelink slot. If a PSFCH transmission resource is configured in one slot, the PSSCH and the PSCCH cannot occupy the symbol used for PSFCH transmission and the AGC and GP symbols before this symbol.

FIG. 9 illustrates an example diagram of a slot structure for a certain sidelink communication system (such as the NR-V2X system). As illustrated in FIG. 9, it is configured by the network that the parameter *sl-StartSymbol* = 3 and the parameter *sl-LengthSymbols* = 11, that is, 11 symbols starting from the symbol with the index 3 in one slot may be used for sidelink transmission. There are transmission resources for the PSFCH in this slot, and the PSFCH occupies symbol 11 and symbol 12. The symbol 11 serves as the AGC symbol of the PSFCH, and symbols 10 and 13 serve as GP, respectively. Therefore, symbols available for PSSCH transmission are symbols 3 to 9. The PSCCH occupies 3 time domain symbols, that is, the PSCCH occupies symbols 3, 4, and 5, and symbol 3 is typically used as an AGC symbol.

The PSSCH may be used to carry second-stage sidelink control information (SCI) and sidelink shared channel (SL-SCH). The second-stage SCI may include different SCI formats, for example, two formats of second-stage SCI, i.e., SCI format 2-A and SCI format 2-B, are defined in 3GPP R16. The SCI format 2-B is suitable for multicast communication method for performing sidelink hybrid automatic repeat request (HARQ) feedback based on distance information. The SCI format 2-A is suitable for other scenarios, such as unicast, multicast, and broadcast that do not require sidelink HARQ feedback, unicast communication method that requires sidelink HARQ feedback, multicast communication method that require feedback of an ACKnowledgement (ACK) or a Negative ACKnowledgement (NACK), etc. A format of the second-stage SCI, i.e., SCI format 2-C, is additionally introduced in 3GPP R17, to indicate a reference resource set and triggering signaling in a specific situation.

FIG. 10 is an example diagram of a structure of the second-stage SCI in a slot. As illustrated in FIG. 10, the modulation symbols of the second-stage SCI are mapped starting from the symbol where the first PSSCH modulation and demodulation reference signal is located in an order of frequency domain followed by time domain, and the symbol is multiplexed with the resource element (RE, or which is referred to be resource unit) of the demodulation reference signal (DMRS) by interleaving. In addition, the modulation symbols of the second-stage SCI cannot be mapped to the REs where the phase tracking reference signals (PT-RSs) are located.

In the SL communication system, the UE autonomously selects resources or determines the transmission resources based on the sidelink resource scheduling of the network, which may cause different UEs to send the PSCCH on the same time-frequency resource. In order to ensure that the receiver can detect at least one PSCCH in the case that resources for the PSCCH conflict, the design scheme of PSCCH DMRS randomization is used in LTE-V2X. Specifically, when the UE sends the PSCCH, the UE may randomly select one value from {0, 3, 6, 9} as the cyclic shift of the DMRS, and if the PSCCH DMRSs sent by multiple UEs on the same time-frequency resource use different cyclic shifts, the receiving UE may still detect at least one PSCCH through orthogonal DMRSs. For the same purpose, three PSCCH DMRS frequency domain orthogonal covering codes (OCCs) are introduced in the NR-V2X for random selection by the sending UE. As shown in Table 1, the i-th bit of the OCC is applied to the i-th DMRS RE in the RB, thereby achieving the effect of distinguishing different UEs.

Table 1

| OCC mask index | OCC mask | | |
|---|---|---|---|
| | $i$ = 0 | $i$ = 1 | $i$ = 2 |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

The DMRS of PSSCH in a certain sidelink communication system (such as the NR-V2X system) borrows from the design in the NR Uu interface, and uses multiple time-domain PSSCH DMRS patterns. In a resource pool, the number of available DMRS patterns is related to the number of PSSCH symbols in the resource pool. For a specific number of PSSCH symbols (including the first AGC symbol) and the number of PSCCH symbols, the available DMRS patterns and the position of each DMRS symbol in the pattern are shown in Table 2. FIG. 11 illustrates a schematic diagram of the time domain positions of four DMRS symbols when there are 13 symbols for the PSSCH.

Table 2

| Number of PSSCH symbols (including first AGC symbol) | DMRS symbol position (relative to the first AGC symbol position) | | | | | |
|---|---|---|---|---|---|---|
| | The number of PSCCH symbols is 2 | | | The number of PSCCH symbols is 3 | | |
| | Number of DMRS Symbols | | | Number of DMRS Symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

In some embodiments, if multiple time domain DMRS patterns are configured in the resource pool, the specific used time domain DMRS pattern is selected by the sending UE and indicated in the first-stage SCI. Such a design allows a high-speed moving UE to select a high-density DMRS pattern, thereby ensuring the accuracy of channel estimation, while for a low-speed moving UE, a low-density DMRS pattern may be adopted, thereby improving spectral efficiency.

The generation method of the PSSCH DMRS sequence is almost identical to the generation method of the PSCCH DMRS sequence, and the only difference is that in the initialization formula $c_{init}$ of the pseudo-random sequence *c(m)*, $N_{ID} = \sum_{i=0}^{L-1} p_i \cdot 2^{L-1-i}$, $P_i$ is the i-th bit cyclic redundancy check (CRC) of the PSCCH scheduling the PSSCH, and L is the number of bits of the PSCCH CRC, for example, L= 24.

In the NR communication system, the Physical Downlink Shared Channel (PDSCH) and the Physical Uplink Shared Channel (PUSCH) support two frequency domain DMRS patterns, i.e., DMRS frequency domain type 1 and DMRS frequency domain type 2. There are two different types of single DMRS symbol and double DMRS symbol for each frequency domain type. Single-symbol DMRS frequency domain type 1 supports 4 DMRS ports, and single-symbol DMRS frequency domain type 2 may support 6 DMRS ports. In the case of dual DMRS symbols, the number of supported ports is doubled. However, in the sidelink communication system (such as NR-V2X), since only two DMRS ports at most are needed to be supported for the PSSCH, only the single-symbol DMRS frequency domain type 1 is supported. FIG. 12 is an example diagram of a single-symbol DMRS frequency domain type 1.

## Sidelink transmission block size (TBS)

The PSSCH follows the TBS determination mechanism of the PDSCH and the PUSCH in the NR, that is, the TBS may be determined according to the reference value of the number of REs for the PSSCH in the slot where the PSSCH is located, so that the actual code rate is as close as possible to the target code rate. It should be noted that the purpose of adopting the reference value of the number of REs instead of the actual number of REs is to ensure that the number of REs for determining the TBS remains unchanged in the PSSCH retransmission process, so that the determined TBS are the same. In order to achieve this purpose, in the determination process of the TBS, the reference value $N_{RE}$ of the number of REs occupied by PSSCH is determined according to the formula (0-1):

$$N_{RE} = N'_{RE} \cdot n_{PRB} - N_{RE}^{SCI,1} - N_{RE}^{SCI,2} \quad (0\text{-}1)$$

Here, $n_{PRB}$ is the number of PRBs occupied by the PSSCH, $N_{RE}^{SCI,1}$ is the number of REs (including the REs occupied by the DMRS of the PSCCH) occupied by the first-stage SCI, $N_{RE}^{SCI,2}$ is the number of REs occupied by the second-stage SCI, and $N'_{RE}$ represents the reference number of REs available for the PSSCH in one PRB, and is determined according to the formula (0-2):

$$N'_{RE} = N_{sc}^{RB}\left(N_{symb}^{sh} - N_{symb}^{PSFCH}\right) - N_{oh}^{PRB} - N_{RE}^{DMRS} \qquad (0\text{-}2)$$

Here, $N_{sc}^{RB} = 12$, which represents the number of subcarriers in one PRB, $N_{symb}^{sh}$ represents the number of symbols available for sidelink in one slot, excluding the last GP symbol and the first symbol for AGC, $N_{symb}^{PSFCH} = 0$ or 3, the specific value of which is indicated by the "number of symbols for PSFCH" field in the first-stage SCI, which is a reference value of the number of symbols occupied by the PSFCH, the value of $N_{oh}^{PRB}$ is configured by the RRC layer parameter, and is used to represent the reference value of the number of REs occupied by the PT-RS and CSI-RS, and $N_{RE}^{DMRS}$ represents the average number of DMRS REs in one slot, and is related to the allowed DMRS pattern in the resource pool, as shown in Table 3.

Table 3

| DMRS pattern | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

## Second-stage SCI

The NR-V2X supports second-stage SCI design. The first-stage SCI is used to carry information related to resource interception, includes time domain and frequency domain resources of the scheduled PSSCH, and indicates the code rate, format and other information of the second-stage SCI. The second-stage SCI provides other information required for decoding for the PSSCH.

The CRC length of the second-stage SCI is 24 bits, adopts Polar encoding method, fixedly adopts QPSK modulation, and adopts the same transmission port as the data part of the PSSCH, so the demodulation reference signal of the PSSCH may be used for demodulation. However, unlike the transmission method of the data part of the PSSCH, when the PSSCH adopts the dual-stream transmission mode, the modulation symbols sent for the second-stage SCI on the two streams are exactly the same, and such a design may ensure the reception performance of the second-stage SCI in the high-correlation channel. The code rate of the second-stage SCI may be dynamically adjusted within a certain range, and the specific code rate is determined by the indication value of the "second-stage SCI code rate offset" field in the first-stage SCI and the code rate corresponding to the MCS index indicated by the "MCS" field, so the receiving end does not need to perform blind detection on the second-stage SCI even after the code rate is changed. However, after the receiving end determines the code rate of the second-stage SCI by the first-stage SCI, it is necessary to determine the number of REs occupied by the second-stage SCI in order to decode the second-stage SCI. The number $Q'_{SCI2}$ of REs occupied by the second-stage SCI is determined according to the formula (0-3):

$$Q'_{SCI2} = min\left\{\left\lceil\frac{(O_{SCI2}+L_{SCI2})\cdot\beta_{offset}^{SCI2}}{Q_m^{SCI2}\cdot R}\right\rceil, \left\lceil\alpha\sum_{l=0}^{N_{symbol}^{PSSCH}-1} M_{sc}^{SCI2}(l)\right\rceil\right\} + \gamma \qquad (0\text{-}3)$$

Here, $O_{SCI2}$ represents the number of second-stage SCI information bits, which is determined by the format of the second-stage SCI.

$L_{SCI2}$ represents the CRC length of the second-stage SCI, which is 24 bits. $\beta_{offset}^{SCI2}$ is the code rate offset of the second-stage SCI, and there are four selectable values for $\beta_{offset}^{SCI2}$ in a resource pool, the minimum selectable value is 1.125, and the maximum selectable value is 20. The above four selectable values are configured by RRC signaling. In one transmission, the value of $\beta_{offset}^{SCI2}$ is selected by the sending terminal and indicated by the "second-stage SCI rate offset" field in the SCI format 1-A. Since the real number of REs occupied by the second-stage SCI is adopted when determining the size of the TB carried by the PSSCH, in order to ensure that the size of the TB determined by the receiving end is the same in one PSSCH retransmission process, the code rate adopted by the second-stage SCI cannot be changed in one PSSCH retransmission process. $Q_m^{SCI2} = 2$, which is the modulation stages of the second-stage SCI.

R is the code rate corresponding to the MCS index indicated by the "MCS" field in the SCI format 1-A, that is, the code rate adopted by the data part of the PSSCH. $M_{sc}^{SCI2}(l) = M_{sc}^{PSSCH}(l) - M_{sc}^{PSCCH}(l)$, which represents the number of REs available for mapping the second-stage SCI on the *l*-th OFDM symbol, $M_{sc}^{PSSCH}(l)$ represents the number of REs in the transmission bandwidth of the PSSCH, and $M_{sc}^{PSCCH}(l)$ is the number of REs for the PSCCH on the *l*-th OFDM symbol.

$$l = 0,1,\ldots,N_{symbol}^{PSSCH} - 1, \text{ and } N_{symbol}^{PSSCH} = N_{symbol}^{sh} - N_{symbol}^{PSFCH}.$$

$N_{symbol}^{sh}$ is determined by the slot structure of the sidelink, and indicates the number of OFDM symbols available for the sidelink in the current slot except the first AGC symbol and the last GP symbol. $N_{symbol}^{PSFCH}$ represents the number of symbols for PSFCH indicated by the "number of symbols for PSFCH" field in SCI Format 1-A.

A range of value of y is 0 to 11, represents the number of remaining REs in the PRB where the last second-satge SCI modulation symbol is located, and the parameter is used to ensure that the resources occupied by the second-stage SCI are an integer number of PRBs.

$\alpha$ is the maximum spectral efficiency of the second-stage SCI configured/preconfigured by the RRC parameter *sl-Scaling.*

Since one PSSCH can be transmitted up to 32 times in the NR-V2X, if the resource for the PSFCH exists in the resource pool and the configuration period of the PSFCH resource is 2 or 4, the available OFDM symbols in the slot where different transmissions of one PSSCH are located may change. If $N_{symbol}^{PSSCH}$ is calculated according to the actual number of OFDM symbols in a slot, different $Q'_{SCI2}$ may be caused by the different numbers of symbols available for PSSCH transmission in a slot, and the change of $Q'_{SCI2}$ may lead to a change in the size of the TB carried by the PSSCH. In order to ensure that the Transport Block Size (TBS) remains unchanged during multiple transmissions of the PSSCH, when calculating $N_{symbol}^{PSSCH}$, the real number of symbols for the PSFCH is not adopted. In addition, when calculating $M_{sc}^{SCI2}(l)$, the number of REs occupied by PSSCH DMRS and the number of REs occupied by PT-RS that may be changed during retransmission process are not taken into account.

As described above, as illustrated in FIG. 10, the modulation symbols of the second-stage SCI are mapped starting from the symbol where the first PSSCH modulation and demodulation reference signal is located in an order of frequency domain followed by time domain, and the symbol is multiplexed with the RE of the DMRS by interleaving, and the modulation symbols of the second-stage SCI cannot be mapped to the REs where the PT-RSs are located.

## Downlink-based positioning

In the downlink-based positioning, a parameter configuration for a downlink positioning reference signal (DL PRS) may include four layers configuration, which are, from high to low, a positioning frequency layer, a TRP layer, a PRS resource set, and a PRS resource, respectively. Hereinafter, the parameter configuration of the DL PRS is introduced in detail.

The network device may provide the terminal device with DL PRS configurations at the four positioning frequency layer. The following configuration parameters of the DL PRS are provided in parameter structure at each positioning frequency layer: a subcarrier spacing of the DL PRS, a cyclic prefix (CP) length of DL PRS, frequency domain resource bandwidth of the DL PRS, a frequency domain starting frequency position of the DL PRS resources, a frequency domain reference point "Point A" of the DL PRS, and comb size "Comb-N" of the DL PRS.

The value of the frequency domain resource bandwidth of the DL PRS may be the number of PRBs allocated to the DL PRS. In some cases, the minimum value of the frequency domain resource bandwidth of the DL PRS may be 24 PRBs, and the granularity may be 4 PRBs. The maximum value of the frequency domain resource bandwidth of the DL PRS may be 272 PRBs.

The frequency domain starting frequency position of the DL PRS resources is used to indicate the index number of the starting PRB for the DL PRS in the frequency domain resource allocation. The index number of the PRB is defined with respect to the frequency domain reference point "PointA" of the DL PRS of the DL PRS.

The above DL PRS configuration parameters corresponding to each positioning frequency layer may be applied to all DL PRS resources included in the positioning frequency layer. That is, within a positioning frequency layer, all DL PRSs from multiple different TRPs may use the same subcarrier spacing and the same CP length, the same comb size, are transmitted on the same frequency subband, and occupy the same bandwidth. Such a design can support the terminal device to simultaneously receive and measure DL PRSs from multiple different TRPs at the same frequency point.

In some scenarios, a parameter at the TRP layer may include an ID parameter for uniquely identifying a positioning TRP, for example, a physical cell ID of the TRP, an NR cell global identifier (NCGI) of the TRP, an absolute radio frequency channel number (ARFCN) of the TRP, or the like. Typically, at most two DL PRS resource sets may be configured in each TRP layer.

For each DL PRS resource set, the configuration parameter(s) of the DL PRS resource set may be applied to all DL PRS resources included in the DL PRS resource set. The configuration parameter(s) of one DL PRS resource set include(s) one or more of the following parameters: a DL PRS resource set identifier (ID) (denoted by *"nr-DL-PRS-ResourceSetID"),* a transmission period and slot offset of the DL PRS (denoted by *"dl-PRS-Periodicity-and-Resource-SetSlotOffset"),* a repetition factor of the DL PRS resource (denoted by *"dl-PRS-ResourceRepetitionFactor"*), a time gap of repeated transmission of the DL PRS resource (denoted by *"dl-PRS-ResourceTimeGap"),* muting configuration of DL PRS, and the number of OFDM symbols occupied by the DL PRS resource (denoted by *"dl-PRS-NumSymbols").*

The above transmission period and the slot offset of the DL PRS are used to indicate the time domain transmission behavior of all DL PRS resources in the DL PRS resource set. In some implementations, the configurable minimum value of the transmission period of the DL PRS is 4 milliseconds and the configurable maximum value of the transmission period of the DL PRS is 10240 milliseconds. Currently, the flexible subcarrier spacings supported by the DL PRS configuration include 15 KHz, 30 KHz, 60 KHz, and 120 KHz. The ranges of the values of the configurable transmission periods of the DL PRS may be the same in a case of different subcarrier spacings. FIG. 13 illustrates a schematic diagram of resources for transmitting the DL PRS in the case where the comb size is 2 and the RE offset is 0 and 1, respectively.

The above repetition factor of the DL PRS resource is used to indicate the number of repetition transmissions of the DL PRS resource in each transmission period of the DL PRS. At present, the repeated transmission of the same DL PRS resource may be used by the terminal device to aggregate the DL PRS energy of multiple transmissions, which is helpful to increase the coverage distance of the DL PRS and improve the accuracy of positioning. In the FR2 system, the repeated transmission of the DL PRS resource may also be used by the terminal device to perform reception beam sweep operation. The terminal device may use different reception beams to receive repeated transmission of the same DL PRS resource, thereby finding an optimal TRP transmission beam to match with the reception beam of the terminal device. On the other hand, repeated transmission of the DL PRS resource will increase the transmission overhead of DL PRS. In order to control the transmission overhead, in the specification of 3GPP NR R16, the values of repetition factor of the DL PRS resource are 1, 2, 4, 6, 8, 16, and 32.

The above time gap of repeated transmission of the DL PRS resource is used to indicate the number of slots between two consecutive repeated transmissions of the same DL PRS resource.

The above muting configuration of the DL PRS is used to indicate that the DL PRS is not transmitted on some allocated time-frequency resources. The muting configuration may be understood that the DL PRS is not transmitted on all allocated time-frequency resources, but is not transmitted intentionally on some specified time-frequency resources. On the one hand, collision between the DL PRS and other signals (such as SSB) may be avoided by the muting configuration. On the other hand, interference between signals sent by different TRPs may be avoided by the muting configuration, for example, it is instructed by the muting configuration that a TRP closer to the terminal device does not send the DL PRS, and a TRP farther away from the terminal device sends the DL PRS, so that the terminal device can receive the DL PRS from the farther TRP without being interfered by the TRP that is instructed to be muted.

The number of OFDM symbols occupied by the DL PRS resource is used to indicate the number of OFDM symbols allocated to one DL PRS resource within one slot.

Generally, the above DL PRS configuration parameter included in the parameters of the TRP layer may be applied to all DL PRS resources in the DL PRS resource set corresponding to the TRP layer. Therefore, the DL PRS is sent by the DL PRS resources belonging to the same DL PRS resource set with the same transmission period and the same number of repeated transmissions, and the DL PRS occupies the same number of OFDM symbols.

In some implementations, for each DL PRS resource, the DL PRS configuration parameter may further include: a DL PRS resource identifier (ID) (denoted by *"nr-DL-PRS-ResourceID"),* a sequence ID of DL PRS (denoted by *"dl-PRS-SequenceID"),* a starting frequency domain resource element offset of the DL PRS (denoted by *"dl-PRS-CombSizeN-*

*AndReOffset"),* a resource slot offset of the DL PRS (denoted by *"dl-PRS-ResourceSlotOffset"),* a OFDM symbol offset of the DL PRS (denoted by *"dl-PRS-ResourceSymbolOffset"),* and quasi co-location (QCL) information of the DL PRS (denoted by *"dl-PRS-QCL-Info"*).

The above starting frequency domain resource element offset of the DL PRS is used to indicate the frequency domain resource element offset value used for resource mapping of the DL PRS resource on the first allocated OFDM symbol in one slot. Generally, based on this parameter and the relative offset value defined in TS 38.211, the terminal device may determine the frequency domain resource element offset value used for resource mapping on each OFDM symbol.

The above resource slot offset of the DL PRS is used to indicate a slot offset with respect to a DL PRS resource set. This parameter may determine the slot position at which each DL PRS resource is located.

The above OFDM symbol offset of the DL PRS is used to indicate a time-frequency resource allocation position of the DL PRS resource within one slot. This parameter may be used to indicate the index number of the starting OFDM symbol within the slot.

The above QCL information of the DL PRS is used to indicate the QCL information of the DL PRS.

**sidelink over unlicensed spectrum (SL-U)**

When performing sidelink transmission over unlicensed spectrum, sidelink transmission needs to meet specific regulatory requirements, including minimum occupied channel bandwidth (OCB) and maximum power spectral density (PSD) requirements. For the requirement of OCB, when the UE uses the channel for data transmission, the occupied channel bandwidth is not less than 80% of the channel bandwidth. For the requirement of maximum power spectral density, the transmission power of the UE cannot be more than 10 dBm per 1 MHz. In order to satisfy the requirements of OCB and PSD regulations, the sidelink transmission over unlicensed spectrum needs to adopt an interlaced resource block (IRB) structure. One IRB includes N RBs discrete in the frequency domain, a total of m IRBs are included in the frequency band range, and the RBs included in the m-th IRB are {m, M+ m, 2M + m, 3M + m,...}.

FIG. 14 illustrates a schematic structure diagram of IRBs. As ullustrated in FIG. 14, the system bandwidth includes 20 RBs, includes 5 IRBs (i.e., M = 5), each IRB includes 4 RBs (i.e., N = 4), and the frequency domain intervals of two adjacent RBs belonging to the same IRB are the same, that is, 5 RBs apart. The numbers in the boxes in the figure represent IRB indexes.

In the SL-U system, if IRB-based resource allocation granularity is adopted, channels such as PSCCH and PSSCH of SL-U system should be based on IRB structure. FIG. 15 illustrates an example diagram of a frame structure of an SL-U system. Here, in the example diagram of the frame structure of FIG. 15, only PSCCH and PSSCH are included in a slot, and the PSFCH is not included. As illustrated in FIG. 15, the bandwidth includes 20 RBs, 5 IRB resources are configured, that is, M = 5, each IRB resource includes 4 RBs, and the numbers in the boxes represent the IRB indexes. In FIG. 15, it is configured by the system that the PSCCH occupies one IRB resource, two OFDM symbols are occupied in the time domain, the PSSCH takes IRB as granularity, the first symbol in the slot is an AGC symbol, and the last symbol in the slot is a GP symbol. In FIG. 15, PSSCH 1 occupies IRB # 0 and IRB # 1, and PSCCH 1 corresponding to the PSSCH 1 occupies IRB # 0. PSSCH 2 occupies IRB # 2, and PSCCH 2 corresponding to the PSSCH 2 also occupies IRB # 2. It should be noted that, for the sake of simplification, the resources occupied by the second-stage SCI and the resources occupied by the PSCCH DMRS and the PSSCH DMRS are not illustrated in FIG. 15.

Over unlicensed spectrum, the UE may access the channel by listen before talk (LBT). The LBT has a granularity of 20 MHz in the frequency domain, and every 20 MHz may be called an RB Set. As illustrated in FIG. 16, a carrier may include multiple RB sets, and there is a guard interval between the RB set and the RB set.

Over the unlicensed spectrum, the UE needs to perform LBT firstly, and can access the channel only after the LBT passes, but the time for the UE to complete the LBT is uncertain. In some implementations, if the UE is restricted to transmit only from the starting point of one slot, the UE may miss a transmission opportunity because it fails to complete LBT before this time. Therefore, in the SL-U, it is considered to add one transmission starting point in one slot, that is, multi-starting point transmission, for example, the additional starting point may be the 3rd or 4th OFDM symbol in the slot.

**Sidelink-based positioning**

In 3GPP R-17, the 3GPP RAN conducts research on sidelink-based positioning, for example, on "NR positioning enhancement" and "scenarios and requirements for within-coverage, partial coverage, and out-of-coverage NR positioning use cases". The research for "scenarios and requirements for within-coverage, partial coverage, and out-of-coverage NR positioning use cases" focuses on V2X and public safety use cases. In addition, some organizations (such as the 3GPP SA1 Working Group) have also formulated requirements for "ranging-based services" and formulated positioning accuracy requirements for IoT usage in out-of-coverage scenarios. 3GPP needs to research and develop sidelink-based positioning solutions to support the use cases, scenarios, and requirements identified in these activities.

In order to improve the positioning accuracy, especially to realize the positioning of UE located outside the coverage of cellular network, 3GPP completed the feasibility and performance study of positioning technology based on sidelink positioning reference signals in the early stage of R18. Solutions based on sidelink positioning (including ranging/direction finding) in the NR system will be standardized next. The solutions based on sidelink positioning mainly includes the following standardization works.

Standardization work 1: Standardize sidelink positioning reference signal (SL PRS). The SL PRS may use a comb-based (full RE mapping mode is not excluded) frequency domain structure, and use a sequence format based on a pseudo-random sequence. The SL PRS may be designed with the existing DL-PRS sequence as the starting point, supporting up to 100 MHz of SL PRS bandwidth at FR1.

Standardization work 2: Standardize the measurement quantity used for sidelink positioning. For example, the measurement quantities used to support the SL RTT, SL-AOA, and SL-TDOA positioning methods are standardized.

Standardization work 3: Standardize the resource allocation solutions of SL PRS. For example, resource allocation solutions of SL PRS include resource allocation solution 1 and resource allocation solution 2. The solution 1 corresponds to SL PRS resources allocated by the network, and solution 2 corresponds to SL PRS resources autonomously selected by the UE. In some implementations, the system supports that the SL PRS shares resource pool with the Rel-16/17/18 sidelink communication, and the SL PRS dedicated resource pool. In some implementations, for the solution 2, one or more of the following need to be studied and standardized: resource selection based on channel interception, random resource selection, congestion control, and resource selection based on UE coordination.

Standardization work 4: Standardize the open-loop power control mechanism of SL PRS transmission, etc.

In some communication systems (such as NR systems), sidelink-based positioning is introduced to enhance positioning techniques. How to determine a resource for the reference signal for sidelink positioning, such as the SL PRS, is a problem to be solved.

In view of the above problems, the embodiments of the present disclosure provide a method for wireless communication. In the embodiments of the present disclosure, the terminal device may transmit a reference signal (i.e., the first reference signal) for sidelink positioning in a slot for sending and receiving other sidelink information to realize sidelink positioning.

The present disclosure does not limit the application scenario of the technical solution. In some embodiments, the technical solution of the present disclosure may be applied to a scenario of licensed spectrum.

Hereinafter, a method for wireless communication according to an embodiment of the present disclosure will be described with reference to FIG. 17. FIG. 17 is a schematic flowchart of a method for wireless communication according to an embodiment of the present disclosure. The method illustrated in FIG. 17 may be performed by the terminal device. The terminal device is not specifically limited in the embodiments of the present disclosure, and the terminal device may be any device related to sidelink positioning.

The method illustrated in FIG. 17 may include the operation S1710.

In operation S1710, the terminal device sends or receives the first PSSCH in the first slot. The first slot is further used for transmitting the first reference signal, and the first reference signal is used for sidelink positioning.

In some embodiments, the above first slot may include a resource in a shared resource pool of sidelink communication. The shared resource pool of the sidelink communication may be understood that the resource pool includes the resource of the PSSCH and the resource for sending other sidelink information (such as signals for sidelink positioning) other than the PSSCH. For example, the resource pool may include SL PRS resource, PSSCH resources, and the like.

In some embodiments, the first PSSCH may be any of the physical sidelink shared channels mentioned above. For example, the first PSSCH may carry sidelink data and/or second-stage SCI.

In some embodiments, the first reference signal may be, for example, the SL PRS mentioned above. In other embodiments, the above first reference signal may also be other signals for sidelink positioning used in the future in the communication system.

In the embodiments of the present disclosure, the terminal device may transmit a reference signal for sidelink positioning (that is, the first reference signal) in a slot for sending and receiving the first PSSCH, that is, the first reference signal shares a resource pool with the first PSSCH to realize sidelink positioning.

When the first reference signal shares a resource pool with the sidelink communication, the first reference signal may be sent in different OFDM symbols in the same slot (i.e., the first slot) as the first PSSCH. The number of OFDM symbols, in the first slot, available for sending the first PSSCH is reduced as compared to that the first reference signal is not sent in the first slot, or there are no resources for sending the first reference signal in the first slot.

In order to solve the problem of how to determine the TBS in the first slot in the above case, the TBS of the first PSSCH may be determined based on the first parameter, and the first parameter is associated with the first reference signal. In some embodiments, the first parameter may be associated with the number of OFDM symbols occupied by the first reference signal. In other embodiments, the first parameter may be associated with a reference value of the number of OFDM symbols, and the reference value of the number of OFDM symbols referred to herein is associated with the first reference signal.

Hereinafter, the above two methods (i.e., the first embodiment and the second embodiment) in which the TBS of the first PSSCH is determined based on the first parameter will be described respectively.

## Embodiment 1

As mentioned above, the first parameter may be associated with the number of OFDM symbols occupied by the first reference signal. For example, the first parameter may be the number of OFDM symbols occupied by the first reference signal. As another example, the first parameter may be determined based on the number of OFDM symbols occupied by the first reference signal.

In some embodiments, the first parameter may be indicated based on the first information. In other words, the first information may indicate the first parameter. The first information may be carried in second-stage SCI associated with the first PSSCH. In some communication systems, SCI format 2-D is introduced to support sidelink positioning, and thus the format of the second-stage SCI mentioned herein may be, for example, SCI format 2-D.

The first information may directly or indirectly indicate the first parameter. For example, the first parameter may be included in the first information. As another example, the first information may indicate the first parameter by a configuration index or an identifier.

In order to ensure the flexibility of TB transmission, N transmissions of the same TB may not always be sent in the same slot as the first reference signal, for example, only the TB in M transmissions and the first reference signal are sent in the same slot, and the TB is sent separately in other N-M transmissions, that is, it is not sent together with the first reference signal, and $M \leq N$.

That is, during multiple transmissions (including initial transmission and retransmission) of the same TB, the TB is not sent together with the first reference signal in some slots, and the TB is sent together with the first reference signal in some slots. In this case, if the TBS of the PSSCH is determined according to the number of OFDM symbols actually occupied by the first reference signal, the size of the TB determined in different transmission procedures may be different.

Therefore, the TBS of the second PSSCH may be the same as the TBS of the first PSSCH in order to perform energy aggregation on the multiple transmitted TB. A TB transmitted in the second PSSCH is the same as a TB transmitted in the first PSSCH. The second PSSCH mentioned herein does not transmit a reference signal for sidelink positioning, that is, the second PSSCH may be a PSSCH, for which the TB is sent separately, being not sent together with the first reference signal.

In some embodiments, the SCI format of the second-stage SCI associated with the second PSSCH may be SCI format 2-D. For example, the number of OFDM symbols occupied by the first reference signal in the second PSSCH may be indicated by information (such as the third information) carried in the second-stage SCI associated with the second PSSCH, and the third information indicates that the number of OFDM symbols occupied by the first reference signal in the second PSSCH is 0.

However, in this case, if it is indicated in the second-stage SCI that the number of OFDM symbols occupied by the first reference signal is 0, the PSSCH associated with the second-stage SCI may be the above second PSSCH or another PSSCH other than the second PSSCH.

Accordingly, in some embodiments, the second-stage SCI associated with the PSSCH may include second information. The second information may be used to indicate whether the PSSCH is the above second PSSCH. In other words, the TBS of the PSSCH may be determined based on the second information. For example, if the value of the second information is the first value, the PSSCH is the second PSSCH, that is, the TBS of the PSSCH is the same as the TBS of the first PSSCH. For another example, if the value of the second information is the second value, the PSSCH is not the above second PSSCH, and the TBS of the PSSCH may be determined based on the reference value of the number of REs occupied by the PSSCH, that is, the TBS of the PSSCH may be determined according to the formula (0-1) mentioned above.

Alternatively, the second-stage SCI associated with the second PSSCH may include the second information. The second information may be used to determine the TBS of the second PSSCH. For example, if the value of the second information is the first value, the second information indicates that the TBS of the second PSSCH is the same as the TBS of the first PSSCH, and/or if the value of the second information is the second value, the second information indicates that the TBS of the second PSSCH is determined based on a reference value of the number of REs occupied by the second PSSCH, that is, the TBS of the second PSSCH may be determined according to the above formula (0-1).

As one example, the second information may be a specific bit field of the second-stage SCI, such as 1 bit. When the value of the bit field is a specific value (i.e., the first value, such as 1), it is indicated that the PSSCH associated with the second-stage SCI is the second PSSCH, and the TBS of the PSSCH is the same as the TBS of the first PSSCH. When the bit field is a non-specific value (that is, the second value), the PSSCH associated with the second-stage SCI is not the second PSSCH, and the PSSCH is determined based on the reference value of the number of REs occupied by the PSSCH, that is, based on the formula (0-1) mentioned above. The size of the bit field and the specific value mentioned herein are given by way of example only, and the specific value mentioned herein may also be 0, which is not limited in the present disclosure.

In other embodiments, the SCI format of the second-stage SCI associated with the PSSCH that is not used for transmitting the reference signal for sidelink positioning may be SCI format 2-A, SCI format 2-B, or SCI format 2-C. Similarly, the PSSCH associated with the second-stage SCI may be the second PSSCH or another PSSCH other than the second PSSCH.

Therefore, in some embodiments, if another terminal device receives multiple second-stage SCIs associated with the PSSCHs for transmitting the same TB, and the format of at least one second-stage SCI among the multiple second-stage SCIs is SCI format 2-D, the TBSs of the PSSCHs associated with the multiple second-stage SCIs are the same. For example, if another terminal device receives the second-stage SCI associated with the first PSSCH and the second-stage SCI associated with the second PSSCH, and the format of at least one of the two second-stage SCIs is SCI format 2-D, the TBS of the first PSSCH is the same as the TBS of the second PSSCH. Another terminal device mentioned here is a terminal device that performs sidelink communication with the terminal device in the embodiments of the present disclosure.

There are multiple methods for determining whether multiple PSSCHs are used to transmit the same TB. That is, the PSSCHs that transmit the same TB may satisfy one or more conditions. For example, the first PSSCH and the second PSSCH mentioned above may satisfy one or more of the following: a source identifier indicated by the second-stage SCI associated with the second PSSCH is the same as a source identifier indicated by the second-stage SCI associated with the first PSSCH, a destination identifier indicated by the second-stage SCI associated with the second PSSCH is the same as a destination identifier indicated by the second-stage SCI associated with the first PSSCH, a HARQ process number indicated by the second-stage SCI associated with the second PSSCH is the same as a HARQ process number indicated by the second-stage SCI associated with the first PSSCH, and a value of a new data indicator (NDI) indicated by the second-stage SCI associated with the second PSSCH is same as a value of a NDI indicated by the second-stage SCI associated with the first PSSCH.

In some embodiments, the first PSSCH may be a PSSCH associated with the initial transmission procedure of one TB mentioned above. In other embodiments, the first PSSCH may be a last PSSCH received by another terminal device as compared to the second PSSCH, or the first PSSCH may be a most recently received PSSCH by another terminal device as compared to the second PSSCH. In this way, when the PSSCH associated with the initial transmission procedure is lost or cannot be obtained, the TBS of the second PSSCH may be determined based on the most recently received PSSCH.

In the embodiment of the present disclosure, the TBS of the first PSSCH is determined based on the first parameter associated with the number of OFDM symbols actually occupied by the first reference signal, which is helpful to accurately adjust the TBS according to the available resources, thereby helping to improve spectral efficiency.

## Embodiment 2

As mentioned above, the first parameter may be associated with the reference value of the number of OFDM symbols. The reference value of the number of OFDM symbols mentioned herein is associated with the first reference signal. For example, the first parameter may be a reference value of the number of OFDM symbols for the first reference signal, or the first parameter may be determined based on one or more resources, in a slot, for sending the first reference signal, for example, the first parameter may be determined based on the number of OFDM symbols, occupied by one or more resources, in the slot, for sending the first reference signal. The number of OFDM symbols for the first reference signal may be the number of OFDM symbols, occupied by one or more resources, in the slot, for sending the first reference signal.

In some embodiments, the second-stage SCI associated with the first PSSCH may include the first indication field for indicating the above first parameter.

In some embodiments, the number of bits occupied by the first indication field may be associated with the number of OFDM symbols for the first reference signal, for example, the number of bits occupied by the first indication field may be determined based on the number of values taken for the number of OFDM symbols for the first reference signal.

As an example, the number of OFDM symbols for the first reference signal has A values (i.e., the number of values is A), and the number of bits occupied by the first indication field is $\lceil log_2(A+1) \rceil$. Here, A is a positive integer greater than or equal to 1. That is, the first indication field may include A+1 values, one of which may be used to indicate that the first parameter is 0, and the other A values of the first indication field may be used to indicate that the first parameter is one of the A values for the number of OFDM symbols of the first reference signal. As a result, the first indication field may be used for indicating a variety of cases of the number of OFDM symbols for the first reference signal, and the use is flexible.

It should be noted that the correspondence relationship between the A+1 values of the first indication field and the multiple values of the first parameter may be determined according to the usage requirement. The correspondence relationship between the A+1 values of the first indication field and the multiple values of the first parameter may be preconfigured or dynamically indicated, which is not limited in the present disclosure.

In some embodiments, the first indication field may occupy 1 bit, and 1 bit may be used to indicate that the first parameter is 0 or X. Here, X is a positive integer greater than or equal to 1, and X is associated with the number of OFDM symbols for the first reference signal.

For example, X may be the maximum value among multiple values of the number of OFDM symbols for the first reference signal, which helps to avoid collision of resources for the TB and the first reference signal.

As another example, X may be determined based on an average value of multiple values of the number of OFDM symbols for the first reference signal. When the average value of the multiple values of the number of OFDM symbols for the first reference signal is an integer, X may be the average value of the multiple values of the number of OFDM symbols for the first reference signal, otherwise X may be a value closest to the average value among the multiple values of the number of OFDM symbols for the first reference signal, or X may be an integer portion of the average value, or a rounded value of the average value. As one example, X may be 3 if the values of the number of OFDM symbols for the first reference signal include 1, 3 and 5, that is, the average value of values of the number of OFDM symbols for the first reference signal is 3. If the multiple values of the number of OFDM symbols for the first reference signal include 1, 2 and 5, that is, the average value of the multiple values of the number of OFDM symbols for the first reference signal is 2.67, then X may be 2 (i.e., the integer portion of 2.67, or the value closest to 2.67 among the three values of 1, 2 and 5), or X may be 3 (i.e., the rounded value of 2.67).

In order to simplify the method of determining X, as another example, X may be a median value among multiple values of the number of OFDM symbols for the first reference signal. As one example, X may be 2 if the multiple values of the number of OFDM symbols for the first reference signal include 1, 2, and 4, i.e., the median value of the multiple values of the number of OFDM symbols for the first reference signal is 2.

The above method of determining the first parameter based on the average value or the median value of multiple values of the number of OFDM symbols for the first reference signal is helpful to avoid collision of resources for the TB and the first reference signal and improve spectral efficiency.

As another example, X may be the most frequently used value among multiple values of the number of OFDM symbols for the first reference signal. The most frequently used value mentioned herein may be associated with, for example, a usage scenario of sidelink positioning. For example, in the first scenario, the most frequently used value among multiple values of the number of OFDM symbols for the first reference signal is Y, then in this scenario, the value of X may be Y. In this way, it helps to reduce the probability of resource conflict.

Table 4 shows a correspondence relationship table of multiple values of the number of OFDM symbols for the first reference signal and X.

Table 4

| Multiple values of the number of OFDM symbols for the first reference signal | X |
|---|---|
| 1, 2 | 1 |
| 1, 3 | 2 |
| 1, 4 | 2 |
| 2, 4 | 3 |
| 1, 2, 4 | 2 |
| 1, 2, 3 | 2 |

In some embodiments, the determination rules of X described above may be preconfigured, or dynamically indicated. In other embodiments, a correspondence relationship between multiple values of the number of OFDM symbols for the first reference signal and X may be preconfigured, as shown in Table 4, or a correspondence relationship between multiple values of the number of OFDM symbols for the first reference signal and X may be dynamically indicated, for example, the content in Table 4 may be dynamically indicated.

In some embodiments, the first parameter is indicated by the sending device of the first PSSCH to the receiving device of the first PSSCH through higher layer signaling, which helps to save processing resources of the receiving device. The higher layer signaling mentioned herein may include, for example, sidelink positioning protocol (SLPP) signaling or RRC signaling.

In order to simplify the method for determining the first parameter, in some embodiments, the first parameter may be determined based on a value of the number of OFDM symbols for the first reference signal. For example, if the value of the number of OFDM symbols for the first reference signal includes one value, then the first parameter may be the value of the number of OFDM symbols for the first reference signal. As another example, if the value of the number of OFDM symbols for the first reference signal includes multiple values, the first parameter may be determined based on the multiple values of the number of OFDM symbols for the first reference signal.

The method for determining the first parameter based on the multiple values of the number of OFDM symbols for the first reference signal may be one or more of the multiple methods for determining X based on the multiple values of the number of OFDM symbols for the first reference signal mentioned above, which will not be described herein for the sake of brevity. Table 5 shows a correspondence relationship table of multiple values of the number of OFDM symbols for the first reference signal and the first parameter.

Table 5

| Multiple values of the number of OFDM symbols for the first reference signal | First parameter |
|---|---|
| 1, 2 | 1 |
| 1, 3 | 2 |
| 1, 4 | 2 |
| 2, 4 | 3 |
| 1, 2, 4 | 2 |
| 1, 2, 3 | 2 |

In some embodiments, the method for determining the first parameter based on the multiple values of the number of OFDM symbols for the first reference signal may be different from the aforementioned method for determining X based on the multiple values of the number of OFDM symbols for the first reference signal.

In some embodiments, the TBS of the first PSSCH may be determined based on a second parameter, and the second parameter may be determined based on the first parameter. The second parameter represents a reference value of the number of REs, available for a PSSCH, in one PRB.

In some embodiments, the second parameter is further determined based on one or more of: the third parameter representing the number of subcarriers in one PRB, the fourth parameter representing the number of OFDM symbols, available for sidelink transmission, in one slot, the fifth parameter representing a reference value of the number of OFDM symbols occupied by the PSFCH, the sixth parameter representing a reference value of the number of REs occupied by a PT-RS and/or a CSI-RS, and the seventh parameter representing an average number of DMRS REs in one slot.

For example, the second parameter may satisfy the following formula:

$$N'_{RE} = N_{sc}^{RB}\left(N_{symb}^{sh} - N_{symb}^{PSFCH} - N_{symb}^{SL-PRS}\right) - N_{oh}^{PRB} - N_{RE}^{DMRS}$$

Here, $N_{symb}^{SL-PRS}$ represents the first parameter, $N'_{RE}$ represents the second parameter, $N_{sc}^{RB}$ represents the third parameter, $N_{symb}^{sh}$ represents the fourth parameter, $N_{symb}^{PSFCH}$ represents the fifth parameter, $N_{oh}^{PRB}$ represents the sixth parameter, and $N_{RE}^{DMRS}$ represents the seventh parameter.

It should be noted that the one or more resources, for transmission of the first reference signal, in the slot may be configured/preconfigured in the resource pool, or determined by the sending device and the receiving device by higher layer signaling (for example, SLPP layer signaling or RRC layer signaling).

In the embodiment of the present disclosure, the TBS of the first PSSCH is determined based on the reference value of the number of OFDM symbols, and the sending device of the first PSSCH does not need to dynamically indicate the OFDM symbol occupied by the first reference signal, thereby facilitating the simplification of signaling design.

As described above, it is usually necessary to obtain the number of REs occupied by the second-stage SCI to decode the second-stage SCI. As mentioned above, the first reference signal may be sent in different OFDM symbols within the same slot (i.e., the first slot) as the first PSSCH. The number of OFDM symbols, in the first slot, available for sending the first PSSCH is reduced as compared to that the first reference signal is not sent in the first slot, or there are no resources for sending the first reference signal in the first slot.

In order to solve the problem of how to determine the number of REs occupied by the second-stage SCI associated with the first PSSCH in this case, the method provided by the embodiment of the present disclosure will be described below in combination with the embodiments 3 to 5.

Embodiment 3

In some embodiments, the number of REs occupied by the second-stage SCI associated with the first PSSCH may be determined based on the number of OFDM symbols for the first reference signal. The SCI format of the second-stage SCI associated with the first PSSCH may be, for example, SCI format 2-D. For example, the number of REs occupied by the second-stage SCI associated with the first PSSCH may be determined based on the number of OFDM symbols, included in one or more resources, for the first reference signal, in a slot.

If the number of OFDM symbols, included in the one or more resources, for the first reference signal, in the slot has only one value, the number of REs occupied by the second-stage SCI associated with the first PSSCH may be determined based on the value. If the number of OFDM symbols, included in one or more resources, for the first reference signal, in the slot has multiple different values, the number of REs occupied by the second-stage SCI associated with the first PSSCH may be determined based on the multiple different values. For example, the number of REs occupied by the second-stage SCI associated with the first PSSCH may be determined based on the maximum number of OFDM symbols included in the resource for the first reference signal in the slot (i.e., the maximum value among the above multiple different values), which is helpful to avoid resource collision. As another example, the number of REs occupied by the second-stage SCI associated with the first PSSCH may be determined based on an average value or a median value among multiple values of the number of OFDM symbols included in the resource for the first reference signal in the slot. As an example, the method for determining based on the average value or the median value among the above multiple values may be one or more of the above multiple methods for determining the first parameter based on the multiple values of the number of OFDM symbols occupied by one or more resources for sending the first reference signal. For another example, when the number of OFDM symbols included in the resource for the first reference signal in the slot includes multiple values, the number of REs occupied by the second-stage SCI associated with the first PSSCH may be determined based on a preconfigured, predefined, or indicated value among the multiple values, for example, determined based on the value of the first parameter in Table 5.

In some embodiments, the number of REs occupied by the second-stage SCI associated with the first PSSCH is determined based on the eighth parameter, the eighth parameter is determined based on one or more of: a value determined according to the number of OFDM symbols, included in one or more resources, for the first reference signal, in the slot, the ninth parameter representing the number of OFDM symbols, available for sidelink transmission, in the slot, and the tenth parameter representing the number of OFDM symbols occupied by the PSFCH.

For example, the eighth parameter satisfies the following formula:

$$N_{symbol}^{PSSCH} = N_{symbol}^{sh} - N_{symbol}^{PSFCH} - N_{symbol}^{SL-PRS}$$

Here, $N_{symbol}^{PSSCH}$ represents the eighth parameter, $N_{symbol}^{sh}$ represents the ninth parameter, $N_{symbol}^{PSFCH}$ represents the tenth parameter, and $N_{symbol}^{SL-PRS}$ represents the value determined according to the number of OFDM symbols, included in the one or more resources, for the first reference signal, in the slot, such as the maximum number of OFDM symbols included in the resources for the first reference signal in the slot, or the value determined based on multiple values of the number of OFDM symbols for the first reference signal.

It should be noted that the resource for the first reference signal in the slot may be configured/preconfigured in the resource pool.

In the embodiment of the present disclosure, the number of REs occupied by the second-stage SCI associated with the first PSSCH is determined based on the resource configured/pre-configured for sending the first reference signal in the resource pool, which is helpful to avoid resource conflict between the OFDM symbol occupied by the second-stage SCI and the OFDM symbol occupied by the first reference signal.

Embodiment 4

In some embodiments, the number of REs occupied by the second-stage SCI associated with the first PSSCH may not be determined based on the first scale factor, and the first scale factor is a parameter configured by higher layer signaling, such as the parameter configured or preconfigured by the RRC parameter sl-Scaling for determining the number of REs occupied by the second-stage SCI. For example, the first scale factor may be the maximum spectral efficiency $\alpha$ in the formula (0-3).

In some embodiments, the number of REs occupied by the second-stage SCI associated with the first PSSCH is determined based on one or more of: an eleventh parameter representing the number of bits included in the second-stage SCI, the twelfth parameter representing a CRC length of the second-stage SCI, the thirteenth parameter representing a code rate offset of the second-stage SCI, the fourteenth parameter representing a modulation stage of the second-stage SCI, the fifteenth parameter indicating a code rate corresponding to a PSSCH, and the sixteenth parameter representing the number of REs remaining in the first PRB. The first PRB is a PRB where the last modulation symbol of the second-stage SCI is located. As one example, the number of REs occupied by the second-stage SCI associated with the first PSSCH satisfies the following formula:

$$Q'_{SCI2} = \left\lceil \frac{(O_{SCI2}+L_{SCI2})\cdot\beta^{SCI2}_{offset}}{Q^{SCI2}_{m}\cdot R} \right\rceil + \gamma,$$

Herein, $Q'_{SCI2}$ represents the number of REs occupied by the second-stage SCI associated with the first PSSCH, $O_{SCI2}$ represents the eleventh parameter, $L_{SCI2}$ represents the twelfth parameter, $\beta^{SCI2}_{offset}$ represents the thirteenth parameter, $Q^{SCI2}_{m}$ presents the fourteenth parameter, R represents the fifteenth parameter, and $\gamma$ represents the sixteenth parameter.

In some embodiments, the number of REs occupied by the second-stage SCI associated with the first PSSCH satisfies the first condition, and the first condition is associated with the first scale factor. For example, the first condition includes: $Q'_{SCI2} - \gamma$ being less than or equal to $\left\lceil \alpha \sum_{l=0}^{N^{PSSCH}_{symbol}-1} M^{SCI2}_{sc}(l) \right\rceil$.

Here, $Q'_{SCI2}$ represents the number of REs occupied by the second-stage SCI associated with the first PSSCH, $\gamma$ represents a number of REs remaining in the first PRB, the first PRB is a PRB where a last modulation symbol of the second-stage SCI is located, $\alpha$ represents the first scale factor, $N^{PSSCH}_{symbol} = N^{sh}_{symbol} - N^{PSFCH}_{symbol}$, $N^{sh}_{symbol}$ represents a number of OFDM symbols, available for sidelink transmission, in a slot, $N^{PSFCH}_{symbol}$ represents a number of OFDM symbols occupied by a PSFCH, $M^{SCI2}_{sc}(l)$ represents the number of REs, available for mapping the second-stage SCI, on a $l$-th OFDM symbol, and a range of a value of $l$ is 0 to $N^{PSSCH}_{symbol} - 1$. For example, the above first condition may be satisfied by adjusting the value of the fifteenth parameter R.

In the embodiment of the present disclosure, the number of REs occupied by the second-stage SCI is not determined based on the first scale factor, which helps to avoid the influence on the number of REs occupied by the second-stage SCI when the first PSSCH and the first reference signal are transmitted in the same slot. For example, when the first condition is satisfied, the determination of the number of REs occupied by the second-stage SCI associated with the first PSSCH is independent of whether the first PSSCH is transmitted in the same slot as the first reference signal, so that the influence on the number of REs occupied by the second-stage SCI is avoided when the first PSSCH and the first reference signal are transmitted in the same slot.

In addition, in the embodiment of the present disclosure, the number of REs occupied by the second-stage SCI is not determined based on the first scale factor, that is, the receiving device does not need to determine the format of the second-stage SCI to be received, and can determine the number of REs occupied by the second-stage SCI to be received. Therefore, in some cases, it is not necessary to add information indicating the second-stage SCI format 2-D in the first-stage SCI, thereby contributing to resource conservation.

**Embodiment 5**

In some embodiments, the number of REs occupied by the second-stage SCI associated with the first PSSCH may be determined based on the second scale factor, and the second scale factor is associated with the SCI format 2-D.

Since the second-stage SCI 2-D (i.e., the second-stage SCI in the format of SCI format 2-D) is typically sent together with the first reference signal, the transmission of the first reference signal has an impact on the number of REs occupied by the second-stage SCI 2-D. Based on this, the second scale factor may be a scale factor used to determine the number of REs occupied by the second-stage SCI 2-D, or the second scale factor may not be used to determine the number of REs occupied by the second-stage SCI of other formats. For example, the second scale factor is different from the first scale factor, the first scale factor is used to determine the number of REs occupied by the second-stage SCI, and the first scale factor is associated with SCI format 2-A, SCI format 2-B, or SCI format 2-C. That is, the first scale factor is a scale factor used to determine the number of REs occupied by the second order SCI 2-A, 2-B or 2-C.

The transmission of the second-stage SCI 2-D together with the first reference signal having impact on the number of REs occupied by the second-stage SCI 2-D may include that the transmission of the second-stage SCI 2-D together with the first reference signal causes reduction of the number of OFDM symbols available for the second-stage SCI 2-D, or reduction of the number of REs occupied by the second-stage SCI 2-D. Thus, in some embodiments, the second scale factor may be less than the first scale factor, thereby helping to reduce the number of REs occupied by the second-stage SCI 2-D.

In some embodiments, the second scale factor may be configured or preconfigured, such as configured or preconfigured by RRC parameters.

In the embodiment of the present disclosure, the method for determining the number of REs occupied by the second-stage SCI by the second scale factor is convenient to implement.

It should be noted that the values and/or meanings of the third parameter, the fourth parameter, the fifth parameter, the sixth parameter, the seventh parameter, the ninth parameter, the tenth parameter, the eleventh parameter, the twelfth parameter, the thirteenth parameter, the fourteenth parameter, the fifteenth parameter, and the sixteenth parameter may be the same as the values and/or meanings of the corresponding parameters in the formulas (0-1), (0-2), and (0-3) described above.

It should be noted that the embodiments mentioned in the present disclosure may be used in combination or separately, which is not limited in the embodiments of the present disclosure. For example, the above method for determining the TBS of the first PSSCH may be used in combination with the method for determining the number of REs occupied by the second-stage SCI, or may be used separately.

According to above, the embodiments of the method of the present disclosure are described in detail with reference to FIG. 1 to FIG. 17, and embodiments of the apparatus of the present disclosure are described in detail with reference to FIG. 18 and FIG. 19. It should be understood that the description of the method embodiment and the description of the apparatus embodiment correspond to each other, and therefore, the portions not described in detail may be referred to the foregoing method embodiments.

FIG. 18 is a schematic structural diagram of a terminal device according to an embodiment of the present disclosure. The terminal device 1800 illustrated in FIG. 18 may include a determination module 1810.

The transceiver module 1810 may be configured to send or receive the first PSSCH in the first slot. The first slot is further used for transmitting the first reference signal, and the first reference signal is used for sidelink positioning.

In some embodiments, a TBS of the first PSSCH is determined based on the first parameter, and the first parameter is associated with the first reference signal.

In some embodiments, the first parameter being associated with the first reference signal includes: the first parameter being a number of OFDM symbols occupied by the first reference signal, or the first parameter being determined based on the number of OFDM symbols occupied by the first reference signal.

In some embodiments, the first parameter is indicated based on first information carried in second-stage SCI associated with the first PSSCH.

In some embodiments, a format of the second-stage SCI is SCI format 2-D.

In some embodiments, a TBS of the second PSSCH is the same as the TBS of the first PSSCH, and a TB transmitted on the second PSSCH is the same as a TB transmitted on the first PSSCH.

In some embodiments, a reference signal for sidelink positioning is not transmitted on the second PSSCH, and a SCI format of second-stage SCI associated with the second PSSCH is SCI format 2-D.

In some embodiments, the second-stage SCI associated with the second PSSCH includes second information for determining the TBS of the second PSSCH.

In some embodiments, if a value of the second information is the first value, the second information indicates that the TBS of the second PSSCH is the same as the TBS of the first PSSCH, and/or if the value of the second information is the second value, the second information indicates that the TBS of the second PSSCH is determined based on a reference value of the number of REs occupied by the second PSSCH.

In some embodiments, the second-stage SCI associated with the second PSSCH includes third information indicating a number of OFDM symbols occupied by the reference signal for sidelink positioning, and the number of OFDM symbols indicated by the third information is 0.

In some embodiments, a reference signal for sidelink positioning is not transmitted on the second PSSCH, and a SCI format of second-stage SCI associated with the second PSSCH is SCI format 2-A, SCI format 2-B or SCI format 2-C.

In some embodiments, the second PSSCH and the first PSSCH satisfy one or more of: a source identity indicated by second-stage SCI associated with the second PSSCH is the same as a source identity indicated by second-stage SCI associated with the first PSSCH; a destination identity indicated by second-stage SCI associated with the second PSSCH is the same as a destination identity indicated by second-stage SCI associated with the first PSSCH; a HARQ process number indicated by second-stage SCI associated with the second PSSCH is the same as a HARQ process number indicated by the second-stage SCI associated with the first PSSCH; and a value of a NDI indicated by the second-stage SCI associated with the second PSSCH is the same as a value of a NDI indicated by the second-stage SCI associated with the first PSSCH.

In some embodiments, the first parameter being associated with the first reference signal includes: the first parameter being a reference value for the number of OFDM symbols for the first reference signal, or the first parameter being determined based on one or more resources, in a slot, for sending the first reference signal.

In some embodiments, second-stage SCI associated with the first PSSCH includes a first indication field for indicating the first parameter.

In some embodiments, the number of bits occupied by the first indication field is associated with the number of OFDM symbols for the first reference signal.

In some embodiments, the number of OFDM symbols for the first reference signal has A values, the number of bits occupied by the first indication field is $\lceil \log_2(A+1) \rceil$, and A is a positive integer greater than or equal to 1.

In some embodiments, the first indication field occupies 1 bit, and the 1 bit is used for indicating that the first parameter is 0 or X, X is a positive integer greater than or equal to 1, and X is associated with the number of OFDM symbols for the first reference signal.

In some embodiments, the first parameter is indicated by a sending device of the first PSSCH to a receiving device of the first PSSCH through higher layer signaling.

In some embodiments, the higher layer signaling includes SLPP signaling or RRC signaling.

In some embodiments, the TBS of the first PSSCH is determined based on the second parameter, the second parameter is determined based on the first parameter, and the second parameter represents a reference value of the number of REs, available for a PSSCH, in one PRB.

In some embodiments, the second parameter is further determined based on one or more of: the third parameter representing the number of subcarriers in one PRB; the fourth parameter representing the number of OFDM symbols, available for sidelink transmission, in one slot; the fifth parameter representing a reference value of the number of OFDM symbols occupied by a PSFCH; the sixth parameter representing a reference value of the number of REs occupied by a PT-RS and/or a CSI-RS; and the seventh parameter representing an average number of DMRS REs in one slot.

In some embodiments, the second parameter satisfies the following formula:

$$N'_{RE} = N_{sc}^{RB}\left(N_{symb}^{sh} - N_{symb}^{PSFCH} - N_{symb}^{SL-PRS}\right) - N_{oh}^{PRB} - N_{RE}^{DMRS}$$

Here, $N_{symb}^{SL-PRS}$ represents the first parameter, $N'_{RE}$ represents the second parameter, $N_{sc}^{RB}$ represents the third parameter, $N_{symb}^{sh}$ represents the fourth parameter, $N_{symb}^{PSFCH}$ represents the fifth parameter, $N_{oh}^{PRB}$ represents the sixth parameter, and $N_{RE}^{DMRS}$ represents the seventh parameter.

In some embodiments, a number of REs occupied by second-stage SCI associated with the first PSSCH is determined based on a number of OFDM symbols, included in one or more resources, for the first reference signal, in a slot.

In some embodiments, the number of REs occupied by the second-stage SCI associated with the first PSSCH is determined based on the maximum number of OFDM symbols included in resource(s), for the first reference signal, within a slot.

In some embodiments, the number of REs occupied by the second-stage SCI associated with the first PSSCH is determined based on the eighth parameter. The eighth parameter is determined based on one or more of: a value determined according to the number of OFDM symbols, included in the one or more resources, for the first reference signal, in the slot; the ninth parameter representing the number of OFDM symbols, available for sidelink transmission, in one slot; and the tenth parameter representing the number of OFDM symbols occupied by a PSFCH.

In some embodiments, the eighth parameter satisfies the following formula:

$$N_{symbol}^{PSSCH} = N_{symbol}^{sh} - N_{symbol}^{PSFCH} - N_{symbol}^{SL-PRS}$$

Here, $N_{symbol}^{PSSCH}$ represents the eighth parameter, $N_{symbol}^{sh}$ represents the ninth parameter, $N_{symbol}^{PSFCH}$ represents the tenth parameter, and $N_{symbol}^{SL-PRS}$ represents the value determined according to the number of OFDM symbols, included in the one or more resources, for the first reference signal, in the slot.

In some embodiments, the number of REs occupied by the second-stage SCI associated with the first PSSCH is not determined based on the first scale factor, and the first scale factor is a parameter configured by higher layer signaling for determining the number of REs occupied by the second-stage SCI.

In some embodiments, the number of REs occupied by the second-stage SCI associated with the first PSSCH is determined based on one or more of: the eleventh parameter representing the number of bits included in the second-stage SCI; the twelfth parameter representing a CRC length of the second-stage SCI; the thirteenth parameter representing a code rate offset of the second-stage SCI; the fourteenth parameter representing a modulation stage of the second-stage SCI; the fifteenth parameter representing a code rate corresponding to a PSSCH; and the sixteenth parameter representing the number of REs remaining in the first PRB. The first PRB is a PRB where a last modulation symbol of the second-stage SCI is located.

In some embodiments, the number of REs occupied by the second-stage SCI associated with the first PSSCH satisfies the following formula:

$$Q'_{SCI2} = \left\lceil \frac{(O_{SCI2} + L_{SCI2}) \cdot \beta_{offset}^{SCI2}}{Q_m^{SCI2} \cdot R} \right\rceil + \gamma$$

Here, $Q'_{SCI2}$ represents the number of REs occupied by the second-stage SCI associated with the first PSSCH, $O_{SCI2}$ represents the eleventh parameter, $L_{SCI2}$ represents the twelfth parameter, $\beta_{offset}^{SCI2}$ represents the thirteenth parameter, $Q_m^{SCI2}$ presents the fourteenth parameter, $R$ represents the fifteenth parameter, and $\gamma$ represents the sixteenth parameter.

In some embodiments, the number of REs occupied by the second-stage SCI associated with the first PSSCH satisfies the first condition, and the first condition is associated with the first scale factor.

In some embodiments, the first condition includes: $Q'_{SCI2} - \gamma$ being less than or equal to $\left\lceil \alpha \sum_{l=0}^{N_{symbol}^{PSSCH}-1} M_{sc}^{SCI2}(l) \right\rceil$.

Here, $Q'_{SCI2}$ represents the number of REs occupied by the second-stage SCI associated with the first PSSCH, $\gamma$ represents a number of REs remaining in the first PRB, the first PRB is a PRB where a last modulation symbol of the second-stage SCI is located, $\alpha$ represents the first scale factor, $N_{symbol}^{PSSCH} = N_{symbol}^{sh} - N_{symbol}^{PSFCH}$, $N_{symbol}^{sh}$ represents a number of OFDM symbols, available for sidelink transmission, in a slot, $N_{symbol}^{PSFCH}$ represents a number of OFDM symbols occupied by a PSFCH, $M_{sc}^{SCI2}(l)$ represents a number of REs, available for mapping the second-stage SCI, on a $l$-th OFDM symbol, and a range of a value of $l$ is 0 to $N_{symbol}^{PSSCH} - 1$.

In some embodiments, the number of REs occupied by second-stage SCI associated with the first PSSCH is determined based on the second scale factor, and the second scale factor is associated with a SCI format 2-D.

In some embodiments, the second scale factor is different from the first scale factor, the first scale factor is used for determining the number of REs occupied by the second-stage SCI, and the first scale factor is associated with SCI format 2-A, SCI format 2-B, or SCI format 2-C.

In some embodiments, the second scale factor is less than the first scale factor.

In some embodiments, a SCI format of the second-stage SCI associated with the first PSSCH is SCI format 2-D.

In some embodiments, the transceiver module 1810 may be a processor 1910. The terminal device 1800 may further include a transceiver 1930 and a memory 1920, specifically as illustrated in FIG. 19.

FIG. 19 is a schematic structural diagram of a communication apparatus according to an embodiment of the present disclosure. The dashed line in FIG. 19 indicates that the unit or module is optional. The apparatus 1900 may be used to implement the method described in the method embodiments described above. The apparatus 1900 may be a chip or a terminal device.

The apparatus 1900 may include one or more processors 1910. The processor 1910 may support the apparatus 1900 to implement the methods described in the previous method embodiments. The processor 1910 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor or the processor may be any conventional processor or the like.

The apparatus 1900 may further include one or more memories 1920. The memory 1920 stores a program that can be executed by the processor 1910 to cause the processor 1910 to perform the method described in the above method embodiments. The memory 1920 may be independent of the processor 1910 or may be integrated in the processor 1910.

The apparatus 1900 may further include a transceiver 1930. The processor 1910 may communicate with other devices or chips through the transceiver 1930. For example, the processor 1910 may transmit and receive data with other devices or chips through the transceiver 1930.

The embodiments of the present disclosure further provide a computer readable storage medium for storing a program. The computer readable storage medium may be applied to the terminal device provided by the embodiment of the present disclosure, and the program causes the computer to execute the method performed by the terminal device in the respective embodiments of the present disclosure.

The embodiments of the present disclosure further provide a computer program product. The computer program product includes a program. The computer program product may be applied to the terminal device provided by the embodiment of the present disclosure, and the program causes the computer to execute the method performed by the terminal device in the respective embodiments of the present disclosure.

The embodiments of the present disclosure further provide a computer program. The computer program may be applied to the terminal device provided by the embodiment of the present disclosure, and the computer program causes the computer to execute the method performed by the terminal device in the respective embodiments of the present disclosure.

It should be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third" and "fourth" etc. in the specification and claims of the present disclosure and the accompanying drawings are used to distinguish different objects, and are not used to describe a specific order. Furthermore, the terms "comprising" and "having" and any variations thereof are intended to cover non-exclusive inclusions.

In embodiments of the present disclosure, the reference to "indication" may be a direct indication, an indirect indication, or may be an indication that there is an association. For example, A indicates B, which may mean that A directly indicates B, for example, B may be acquired by A. It may also be indicated that A indicates B indirectly, for example, A indicates C, and B may be obtained through C. It may also be indicated that there is an association relationship between A and B.

In the embodiments of the present disclosure, "B corresponding to A" means that B is associated with A, and B may be determined according to A. However, it should also be understood that determining B according to A does not mean that B is determined according to A alone, and that B may also be determined according to A and/or other information.

In the embodiments of the present disclosure, the term "correspondence" may indicate that there is a direct correspondence or indirect correspondence relationship between the two objects, may indicate that there is an association relationship between the two objects, or may indicate a relationship between indicating and being instructed, configuring and being configured, or the like.

In the embodiments of the present disclosure, the reference to "comprising" may refer to directly comprising or indirectly comprising. Alternatively, the reference to "comprising" in the embodiments of the present disclosure may be replaced with "indicating" or "for determining". For example, A includes B, which may be replaced with that A indicates B, or A is used for determining B.

In the embodiments of the present disclosure, "predefined" or "preconfigured" may be realized by storing corresponding codes, tables, or other methods that may be used to indicate relevant information in advance in devices (including, for example, terminal devices and network devices), and the present disclosure does not limit specific implementation methods thereof. For example, "predefined" may refer to being defined in the protocol.

In the embodiments of the present disclosure, the "protocol" may refer to a standard protocol in the communication field, and may include, for example, an LTE protocol, an NR protocol, and related protocols applied to future communication systems, which is not limited in the present disclosure.

The term "and/or" in the embodiments of the present disclosure is only used for describing an association relationship of association objects, which indicates that there may be three kinds of relationships, for example, A and/or B, which may indicate that A exists alone, A and B exist simultaneously, and B exists alone. In addition, the character "/" in the present disclosure generally indicates that there is an "or" relationship between the association objects.

In various embodiments of the present disclosure, the size of the sequence number of the above-described processes does not mean the sequence of execution, and the sequence of execution of each process should be determined by its function and internal logic, and should not constitute any limitation on the implementation process of the embodiments of the present disclosure.

In several embodiments provided herein, it should be understood that the disclosed systems, apparatuses, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the present embodiment.

In addition, various functional units in respective embodiments of the present disclosure may be integrated in one processing unit, each unit may be physically present alone, or two or more units may be integrated in one unit.

In the embodiments described above, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer readable storage medium may be any available medium that may be read by a computer or a data storage device such as a server, a data center, or the like that incorporates one or more available medium integrations. The available medium may be magnetic medium (e.g., floppy disk, hard disk, magnetic tape), optical media (e.g., digital video disc (DVD)), or semiconductor medium (e.g., solid state disk (SSD)), etc.

The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

## Claims

**1.** A method for wireless communication, comprising:
sending or receiving, by a terminal device, a first physical sidelink shared channel (PSSCH) in a first slot, wherein the first slot is further used for transmitting a first reference signal, and the first reference signal is used for sidelink positioning.

**2.** The method of claim 1, wherein a transmission block size (TBS) of the first PSSCH is determined based on a first parameter, and the first parameter is associated with the first reference signal.

**3.** The method of claim 2, wherein the first parameter being associated with the first reference signal comprises:

the first parameter being a number of orthogonal frequency division multiplexing (OFDM) symbols occupied by the first reference signal; or
the first parameter being determined based on the number of OFDM symbols occupied by the first reference signal.

**4.** The method of claim 3, wherein the first parameter is indicated based on first information carried in second-stage sidelink control information (SCI) associated with the first PSSCH.

**5.** The method of claim 4, wherein a format of the second-stage SCI is SCI format 2-D.

**6.** The method of any one of claims 3 to 5, wherein a TBS of a second PSSCH is same as the TBS of the first PSSCH, and a transmission block (TB) transmitted on the second PSSCH is same as a TB transmitted on the first PSSCH.

**7.** The method of claim 6, wherein a reference signal for sidelink positioning is not transmitted on the second PSSCH, and a SCI format of second-stage SCI associated with the second PSSCH is SCI format 2-D.

**8.** The method of claim 7, wherein the second-stage SCI associated with the second PSSCH comprises second information for determining the TBS of the second PSSCH.

**9.** The method of claim 8, wherein

if a value of the second information is a first value, the second information indicates that the TBS of the second PSSCH is the same as the TBS of the first PSSCH; and/or
if the value of the second information is a second value, the second information indicates that the TBS of the second PSSCH is determined based on a reference value of a number of Resource Elements (REs) occupied by the second PSSCH.

**10.** The method of any one of claims 7 to 9, wherein the second-stage SCI associated with the second PSSCH comprises third information indicating a number of OFDM symbols occupied by the reference signal for sidelink positioning, and the number of OFDM symbols indicated by the third information is 0.

**11.** The method of claim 6, wherein a reference signal for sidelink positioning is not transmitted on the second PSSCH, and a SCI format of second-stage SCI associated with the second PSSCH is SCI format 2-A, SCI format 2-B or SCI format 2-C.

**12.** The method of any one of claims 6 to 11, wherein the second PSSCH and the first PSSCH satisfy one or more of:

a source identity indicated by second-stage SCI associated with the second PSSCH is same as a source identity indicated by second-stage SCI associated with the first PSSCH;
a destination identity indicated by the second-stage SCI associated with the second PSSCH is same as a destination identity indicated by the second-stage SCI associated with the first PSSCH;
a HARQ process number indicated by the second-stage SCI associated with the second PSSCH is same as a HARQ process number indicated by the second-stage SCI associated with the first PSSCH; and
a value of a new data indicator (NDI) indicated by the second-stage SCI associated with the second PSSCH is same as a value of a NDI indicated by the second-stage SCI associated with the first PSSCH.

**13.** The method of claim 2, wherein the first parameter being associated with the first reference signal comprises:

the first parameter being a reference value of a number of OFDM symbols for the first reference signal; or
the first parameter being determined based on one or more resources, in a slot, for sending the first reference signal.

**14.** The method of claim 13, wherein second-stage SCI associated with the first PSSCH comprises a first indication field for indicating the first parameter.

**15.** The method of claim 14, wherein a number of bits occupied by the first indication field is associated with the number of OFDM symbols for the first reference signal.

**16.** The method of claim 15, wherein the number of OFDM symbols for the first reference signal has A values, the number of bits occupied by the first indication field is $\lceil log_2(A+1) \rceil$, and A is a positive integer greater than or equal to 1.

**17.** The method of claim 14, wherein the first indication field occupies 1 bit, and the 1 bit is used for indicating that the first parameter is 0 or X, X is a positive integer greater than or equal to 1, and X is associated with the number of OFDM symbols for the first reference signal.

**18.** The method of claim 13, wherein the first parameter is indicated by a sending device of the first PSSCH to a receiving device of the first PSSCH through higher layer signaling.

**19.** The method of claim 18, wherein the higher layer signaling comprises sidelink positioning protocol (SLPP) signaling or Radio Resource Control (RRC) signaling.

**20.** The method of any one of claims 13 to 19, wherein the TBS of the first PSSCH is determined based on a second parameter, the second parameter is determined based on the first parameter, and the second parameter represents a reference value of a number of REs, available for a PSSCH, in one physical resource block (PRB).

**21.** The method of claim 20, wherein the second parameter is further determined based on one or more of:

a third parameter representing a number of subcarriers in one PRB;
a fourth parameter representing a number of OFDM symbols, available for sidelink transmission, in one slot;

a fifth parameter representing a reference value of a number of OFDM symbols occupied by a physical sidelink feedback channel (PSFCH);
a sixth parameter representing a reference value of a number of REs occupied by a phase tracking reference signal (PT-RS) and/or a Channel State Information - Reference Signal (CSI-RS); and
a seventh parameter representing an average number of Demodulation Reference Signal Resource Elements (DMRS REs) in one slot.

**22.** The method of claim 21, wherein the second parameter satisfies following formula:

$$N'_{RE} = N_{sc}^{RB}\left(N_{symb}^{sh} - N_{symb}^{PSFCH} - N_{symb}^{SL-PRS}\right) - N_{oh}^{PRB} - N_{RE}^{DMRS};$$

wherein $N_{symb}^{SL-PRS}$ represents the first parameter, $N'_{RE}$ represents the second parameter, $N_{sc}^{RB}$ represents the third parameter, $N_{symb}^{sh}$ represents the fourth parameter, $N_{symb}^{PSFCH}$ represents the fifth parameter, $N_{oh}^{PRB}$ represents the sixth parameter, and $N_{RE}^{DMRS}$ represents the seventh parameter.

**23.** The method of claim 1, wherein a number of REs occupied by second-stage SCI associated with the first PSSCH is determined based on a number of OFDM symbols, comprised in one or more resources, for the first reference signal, in a slot.

**24.** The method of claim 23, wherein the number of REs occupied by the second-stage SCI associated with the first PSSCH is determined based on a maximum number of OFDM symbols comprised in resource(s), for the first reference signal, in the slot.

**25.** The method of claim 23 or 24, wherein the number of REs occupied by the second-stage SCI associated with the first PSSCH is determined based on an eighth parameter, and the eighth parameter is determined based on one or more of:

a value determined according to the number of OFDM symbols, comprised in the one or more resources, for the first reference signal, in the slot;
a ninth parameter representing a number of OFDM symbols, available for sidelink transmission, in the slot; and
a tenth parameter representing a number of OFDM symbols occupied by a PSFCH.

**26.** The method of claim 25, wherein the eighth parameter satisfies following formula:

$$N_{symbol}^{PSSCH} = N_{symbol}^{sh} - N_{symbol}^{PSFCH} - N_{symbol}^{SL-PRS};$$

wherein $N_{symbol}^{PSSCH}$ represents the eighth parameter, $N_{symbol}^{sh}$ represents the ninth parameter, $N_{symbol}^{PSFCH}$ represents the tenth parameter, and $N_{symbol}^{SL-PRS}$ represents a value determined according to the number of OFDM symbols, comprised in the one or more resources, for the first reference signal, in the slot.

**27.** The method of claim 1, wherein a number of REs occupied by second-stage SCI associated with the first PSSCH is not determined based on a first scale factor, and the first scale factor is a parameter configured by higher layer signaling for determining the number of REs occupied by the second-stage SCI.

**28.** The method of claim 27, wherein the number of REs occupied by the second-stage SCI associated with the first PSSCH is determined based on one or more of:

an eleventh parameter representing a number of bits comprised in the second-stage SCI;
a twelfth parameter representing a cyclic redundancy check (CRC) length of the second-stage SCI;
a thirteenth parameter representing a code rate offset of the second-stage SCI;
a fourteenth parameter representing a modulation stage of the second-stage SCI;
a fifteenth parameter indicating a code rate corresponding to a PSSCH; and

a sixteenth parameter representing a number of REs remaining in the first PRB, wherein the first PRB is a PRB where a last modulation symbol of the second-stage SCI is located.

**29.** The method of any one of claims 28, wherein the number of REs occupied by the second-stage SCI associated with the first PSSCH satisfies following formula:

$$Q'_{SCI2} = \left\lceil \frac{(O_{SCI2}+L_{SCI2})\cdot \beta_{offset}^{SCI2}}{Q_m^{SCI2}\cdot R} \right\rceil + \gamma;$$

wherein $Q'_{SCI2}$ represents the number of REs occupied by the second-stage SCI associated with the first PSSCH, $O_{SCI2}$ represents the eleventh parameter, $L_{SCI2}$ represents the twelfth parameter, $\beta_{offset}^{SCI2}$ represents the thirteenth parameter, $Q_m^{SCI2}$ presents the fourteenth parameter, R represents the fifteenth parameter, and $\gamma$ represents the sixteenth parameter.

**30.** The method of any one of claims 27 to 29, wherein the number of REs occupied by the second-stage SCI associated with the first PSSCH satisfies a first condition, and the first condition is associated with the first scale factor.

**31.** The method of claim 30, wherein the first condition comprises:

$$Q'_{SCI2} - \gamma \text{ being less than or equal to } \left\lceil \alpha \sum_{l=0}^{N_{symbol}^{PSSCH}-1} M_{sc}^{SCI2}(l) \right\rceil;$$

wherein $Q'_{SCI2}$ represents the number of REs occupied by the second-stage SCI associated with the first PSSCH, $\gamma$ represents a number of REs remaining in the first PRB, the first PRB is a PRB where a last modulation symbol of the second-stage SCI is located, $\alpha$ represents the first scale factor, $N_{symbol}^{PSSCH} = N_{symbol}^{sh} - N_{symbol}^{PSFCH}$, $N_{symbol}^{sh}$ represents a number of OFDM symbols, available for sidelink transmission, in a slot, $N_{symbol}^{PSFCH}$ represents a number of OFDM symbols occupied by a PSFCH, $M_{sc}^{SCI2}(l)$ represents a number of REs, available for mapping the second-stage SCI, on a *l* -th OFDM symbol, and a range of a value of *l* is 0 to $N_{symbol}^{PSSCH} - 1$.

**32.** The method of claim 1, wherein a number of REs occupied by second-stage SCI associated with the first PSSCH is determined based on a second scale factor, and the second scale factor is associated with a SCI format 2-D.

**33.** The method of claim 32, wherein the second scale factor is different from a first scale factor, the first scale factor is used for determining the number of REs occupied by the second-stage SCI, and the first scale factor is associated with SCI format 2-A, SCI format 2-B, or SCI format 2-C.

**34.** The method of claim 33, wherein the second scale factor is less than the first scale factor.

**35.** The method of any one of claims 23 to 34, wherein a SCI format of the second-stage SCI associated with the first PSSCH is SCI format 2-D.

**36.** A terminal device, comprising:
a transceiver module, configured to send or receive a first physical sidelink shared channel (PSSCH) in a first slot, wherein the first slot is further used for transmitting a first reference signal, and the first reference signal is used for sidelink positioning.

**37.** The device of claim 36, wherein a transmission block size (TBS) of the first PSSCH is determined based on a first parameter, and the first parameter is associated with the first reference signal.

**38.** The device of claim 37, wherein the first parameter being associated with the first reference signal comprises:

the first parameter being a number of orthogonal frequency division multiplexing (OFDM) symbols occupied by the first reference signal; or
the first parameter being determined based on the number of OFDM symbols occupied by the first reference signal.

**39.** The device of claim 38, wherein the first parameter is indicated based on first information carried in second-stage sidelink control information (SCI) associated with the first PSSCH.

**40.** The device of claim 39, wherein a format of the second-stage SCI is SCI format 2-D.

**41.** The device of any one of claims 38 to 40, wherein a TBS of a second PSSCH is same as the TBS of the first PSSCH, and a transmission block (TB) transmitted on the second PSSCH is same as a TB transmitted on the first PSSCH.

**42.** The device of claim 41, wherein a reference signal for sidelink positioning is not transmitted on the second PSSCH, and a SCI format of second-stage SCI associated with the second PSSCH is SCI format 2-D.

**43.** The device of claim 42, wherein the second-stage SCI associated with the second PSSCH comprises second information for determining the TBS of the second PSSCH.

**44.** The device of claim 43, wherein

if a value of the second information is a first value, the second information indicates that the TBS of the second PSSCH is the same as the TBS of the first PSSCH; and/or
if the value of the second information is a second value, the second information indicates that the TBS of the second PSSCH is determined based on a reference value of a number of Resource Elements (REs) occupied by the second PSSCH.

**45.** The device of any one of claims 42 to 44, wherein the second-stage SCI associated with the second PSSCH comprises third information indicating a number of OFDM symbols occupied by the reference signal for sidelink positioning, and the number of OFDM symbols indicated by the third information is 0.

**46.** The device of claim 41, wherein a reference signal for sidelink positioning is not transmitted on the second PSSCH, and a SCI format of second-stage SCI associated with the second PSSCH is SCI format 2-A, SCI format 2-B or SCI format 2-C.

**47.** The device of any one of claims 41 to 46, wherein the second PSSCH and the first PSSCH satisfy one or more of:

a source identity indicated by second-stage SCI associated with the second PSSCH is same as a source identity indicated by second-stage SCI associated with the first PSSCH;
a destination identity indicated by the second-stage SCI associated with the second PSSCH is same as a destination identity indicated by the second-stage SCI associated with the first PSSCH;
a HARQ process number indicated by the second-stage SCI associated with the second PSSCH is same as a HARQ process number indicated by the second-stage SCI associated with the first PSSCH; and
a value of a new data indicator (NDI) indicated by the second-stage SCI associated with the second PSSCH is same as a value of a NDI indicated by the second-stage SCI associated with the first PSSCH.

**48.** The device of claim 37, wherein the first parameter being associated with the first reference signal comprises:

the first parameter being a reference value of a number of OFDM symbols for the first reference signal; or
the first parameter being determined based on one or more resources, in a slot, for sending the first reference signal.

**49.** The device of claim 48, wherein second-stage SCI associated with the first PSSCH comprises a first indication field for indicating the first parameter.

**50.** The device of claim 49, wherein a number of bits occupied by the first indication field is associated with the number of OFDM symbols for the first reference signal.

**51.** The device of claim 50, wherein the number of OFDM symbols for the first reference signal has A values, the number of bits occupied by the first indication field is $\lceil log_2(A+1) \rceil$, and A is a positive integer greater than or equal to 1.

**52.** The device of claim 49, wherein the first indication field occupies 1 bit, and the 1 bit is used for indicating that the first parameter is 0 or X, X is a positive integer greater than or equal to 1, and X is associated with the number of OFDM symbols for the first reference signal.

**53.** The device of claim 48, wherein the first parameter is indicated by a sending device of the first PSSCH to a receiving device of the first PSSCH through higher layer signaling.

**54.** The device of claim 53, wherein the higher layer signaling comprises sidelink positioning protocol (SLPP) signaling or Radio Resource Control (RRC) signaling.

**55.** The device of any one of claims 48 to 54, wherein the TBS of the first PSSCH is determined based on a second parameter, the second parameter is determined based on the first parameter, and the second parameter represents a reference value of a number of REs, available for a PSSCH, in one physical resource block (PRB).

**56.** The device of claim 55, wherein the second parameter is further determined based on one or more of:

a third parameter representing a number of subcarriers in one PRB;
a fourth parameter representing a number of OFDM symbols, available for sidelink transmission, in one slot;
a fifth parameter representing a reference value of a number of OFDM symbols occupied by a physical sidelink feedback channel (PSFCH);
a sixth parameter representing a reference value of a number of REs occupied by a phase tracking reference signal (PT-RS) and/or a Channel State Information - Reference Signal (CSI-RS); and
a seventh parameter representing an average number of Demodulation Reference Signal Resource Elements (DMRS REs) in one slot.

**57.** The device of claim 56, wherein the second parameter satisfies following formula:

$$N'_{RE} = N_{sc}^{RB}\left(N_{symb}^{sh} - N_{symb}^{PSFCH} - N_{symb}^{SL-PRS}\right) - N_{oh}^{PRB} - N_{RE}^{DMRS};$$

wherein $N_{symb}^{SL-PRS}$ represents the first parameter, $N'_{RE}$ represents the second parameter, $N_{sc}^{RB}$ represents the third parameter, $N_{symb}^{sh}$ represents the fourth parameter, $N_{symb}^{PSFCH}$ represents the fifth parameter, $N_{oh}^{PRB}$ represents the sixth parameter, and $N_{RE}^{DMRS}$ represents the seventh parameter.

**58.** The device of claim 36, wherein a number of REs occupied by second-stage SCI associated with the first PSSCH is determined based on a number of OFDM symbols, comprised in one or more resources, for the first reference signal, in a slot.

**59.** The device of claim 58, wherein the number of REs occupied by the second-stage SCI associated with the first PSSCH is determined based on a maximum number of OFDM symbols comprised in resource(s), for the first reference signal, in the slot.

**60.** The device of claim 58 or 59, wherein the number of REs occupied by the second-stage SCI associated with the first PSSCH is determined based on an eighth parameter, and the eighth parameter is determined based on one or more of:

a value determined according to the number of OFDM symbols, comprised in the one or more resources, for the first reference signal, in the slot;
a ninth parameter representing a number of OFDM symbols, available for sidelink transmission, in the slot; and
a tenth parameter representing a number of OFDM symbols occupied by a PSFCH.

**61.** The device of claim 60, wherein the eighth parameter satisfies following formula:

$$N_{symbol}^{PSSCH} = N_{symbol}^{sh} - N_{symbol}^{PSFCH} - N_{symbol}^{SL-PRS};$$

wherein $N_{symbol}^{PSSCH}$ represents the eighth parameter, $N_{symbol}^{sh}$ represents the ninth parameter, $N_{symbol}^{PSFCH}$ represents the tenth parameter, and $N_{symbol}^{SL-PRS}$ represents the value determined according to the number of OFDM symbols, comprised in the one or more resources, for the first reference signal, in the slot.

**62.** The device of claim 36, wherein a number of REs occupied by second-stage SCI associated with the first PSSCH is not determined based on a first scale factor, and the first scale factor is a parameter configured by higher layer signaling for determining the number of REs occupied by the second-stage SCI.

**63.** The device of claim 62, wherein the number of REs occupied by the second-stage SCI associated with the first PSSCH is determined based on one or more of:

an eleventh parameter representing a number of bits comprised in the second-stage SCI;
a twelfth parameter representing a cyclic redundancy check (CRC) length of the second-stage SCI;
a thirteenth parameter representing a code rate offset of the second-stage SCI;
a fourteenth parameter representing a modulation stage of the second-stage SCI;
a fifteenth parameter representing a code rate corresponding to a PSSCH; and
a sixteenth parameter representing a number of REs remaining in the first PRB, wherein the first PRB is a PRB where a last modulation symbol of the second-stage SCI is located.

**64.** The device of any one of claims 63, wherein the number of REs occupied by the second-stage SCI associated with the first PSSCH satisfies following formula:

$$Q'_{SCI2} = \left\lceil \frac{(O_{SCI2} + L_{SCI2}) \cdot \beta_{offset}^{SCI2}}{Q_m^{SCI2} \cdot R} \right\rceil + \gamma;$$

wherein $Q'_{SCI2}$ represents the number of REs occupied by the second-stage SCI associated with the first PSSCH, $O_{SCI2}$ represents the eleventh parameter, $L_{SC12}$ represents the twelfth parameter, $\beta_{offset}^{SCI2}$ represents the thirteenth parameter, $Q_m^{SCI2}$ presents the fourteenth parameter, R represents the fifteenth parameter, and $\gamma$ represents the sixteenth parameter.

**65.** The device of any one of claims 62 to 64, wherein the number of REs occupied by the second-stage SCI associated with the first PSSCH satisfies a first condition, and the first condition is associated with the first scale factor.

**66.** The device of claim 65, wherein the first condition comprises:

$$Q'_{SCI2} - \gamma \text{ being less than or equal to } \left\lceil \alpha \sum_{l=0}^{N_{symbol}^{PSSCH}-1} M_{sc}^{SCI2}(l) \right\rceil;$$

wherein $Q'_{SCI2}$ represents the number of REs occupied by the second-stage SCI associated with the first PSSCH, $\gamma$ represents a number of REs remaining in the first PRB, the first PRB is a PRB where a last modulation symbol of the second-stage SCI is located, $\alpha$ represents the first scale factor, $N_{symbol}^{PSSCH} = N_{symbol}^{sh} - N_{symbol}^{PSFCH}$, $N_{symbol}^{sh}$ represents a number of OFDM symbols, available for sidelink transmission, in a slot, $N_{symbol}^{PSFCH}$ represents a number of OFDM symbols occupied by a PSFCH, $M_{sc}^{SCI2}(l)$ represents a number of REs, available for mapping the second-stage SCI, on a $l$ -th OFDM symbol, and a range of a value of $l$ is 0 to $N_{symbol}^{PSSCH} - 1$ .

**67.** The device of claim 36, wherein a number of REs occupied by second-stage SCI associated with the first PSSCH is determined based on a second scale factor, and the second scale factor is associated with a SCI format 2-D.

**68.** The device of claim 67, wherein the second scale factor is different from a first scale factor, the first scale factor is used for determining the number of REs occupied by the second-stage SCI, and the first scale factor is associated with SCI format 2-A, SCI format 2-B, or SCI format 2-C.

**69.** The device of claim 68, wherein the second scale factor is less than the first scale factor.

**70.** The device of any one of claims 58 to 69, wherein a SCI format of the second-stage SCI associated with the first PSSCH is SCI format 2-D.

**71.** A terminal device, comprising a memory and a processor, wherein the memory is configured to store a program, and the processor is configured to invoke the program in the memory to cause the terminal device to perform the method of any one of claims 1 to 35.

**72.** An apparatus, comprising a processor, wherein the processor is configured to invoke a program from a memory to cause the apparatus to perform the method of any one of claims 1 to 35.

**73.** A chip, comprising a processor, wherein the processor is configured to invoke a program from a memory to cause a device on which the chip is mounted to perform the method of any one of claims 1 to 35.

**74.** A computer readable storage medium having stored thereon a program that causes a computer to perform the method of any one of claims 1 to 35.

**75.** A computer program product comprising a program that causes a computer to perform the method of any one of claims 1-35.

**76.** A computer program causing a computer to perform the method of any one of claims 1 to 35.

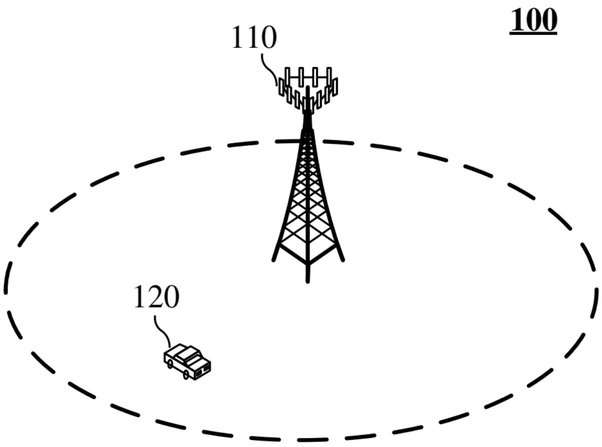


FIG. 1

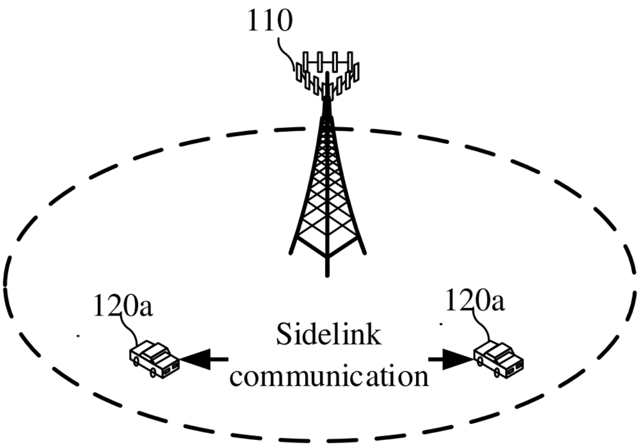


FIG. 2

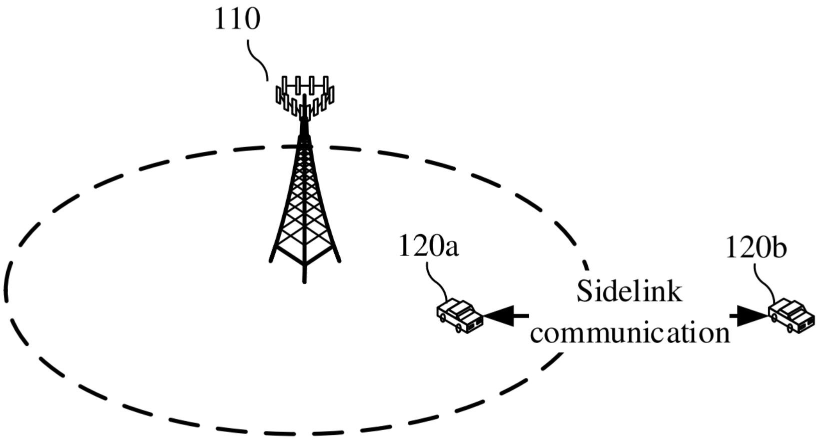


FIG. 3

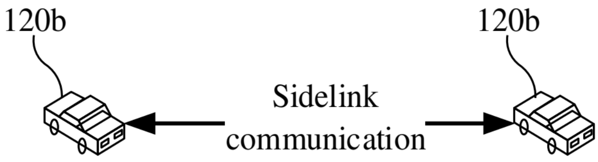


FIG. 4

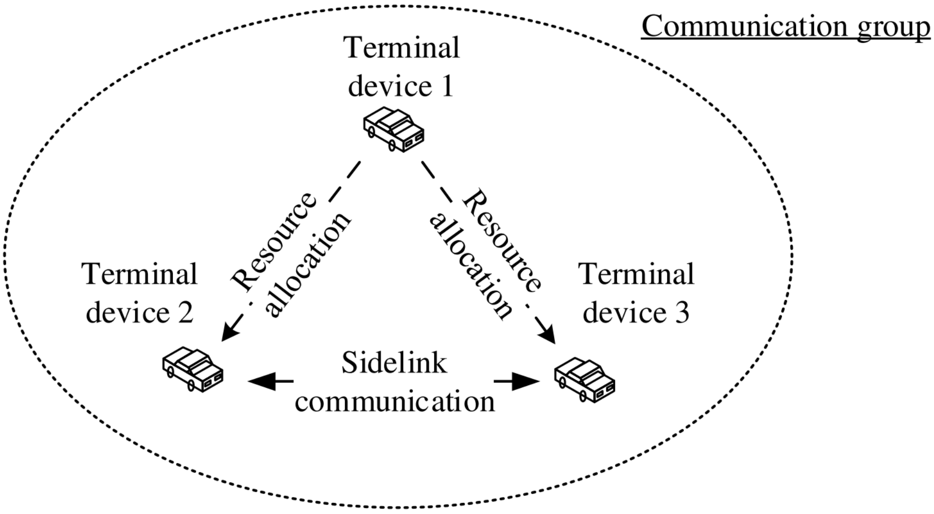


FIG. 5

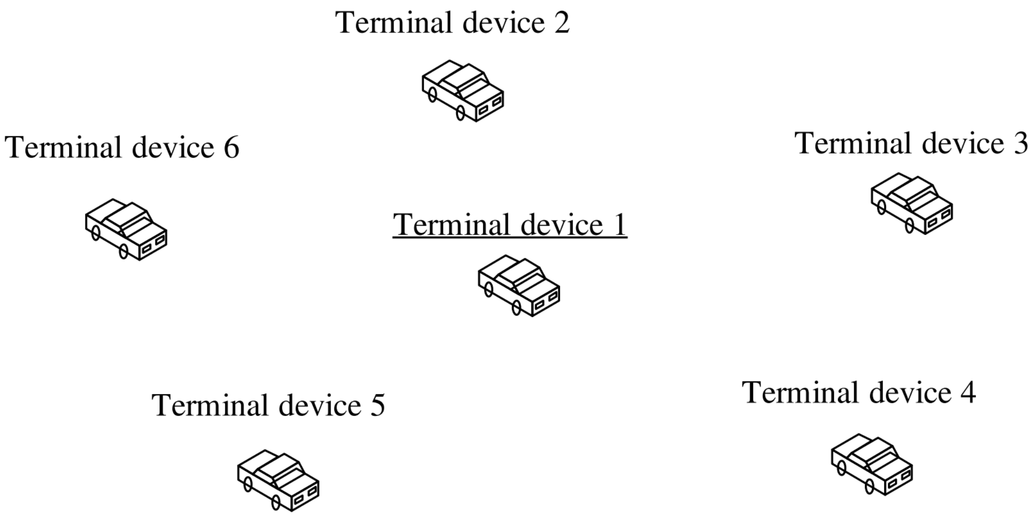


FIG. 6

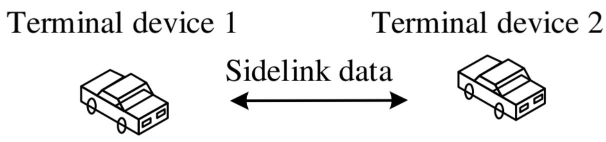


FIG. 7

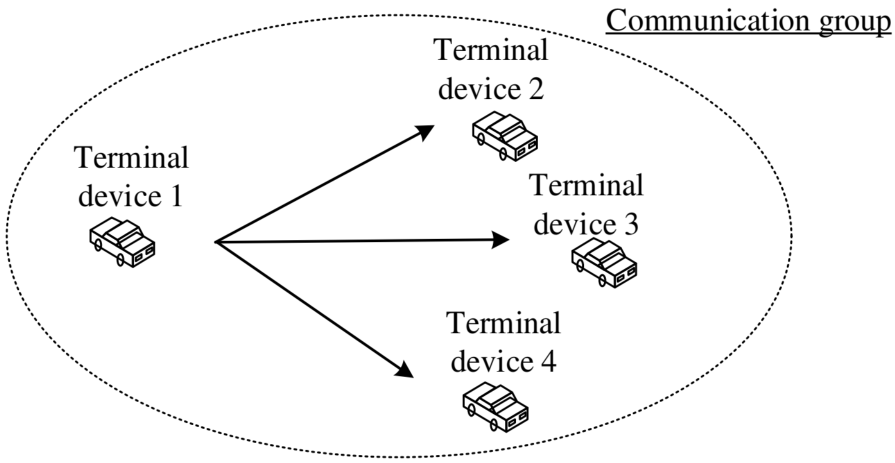


FIG. 8

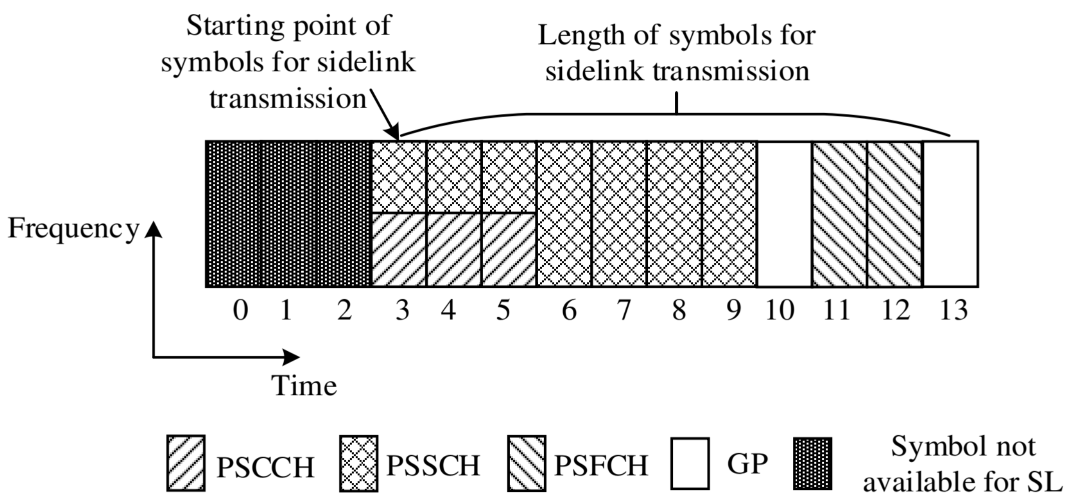


FIG. 9

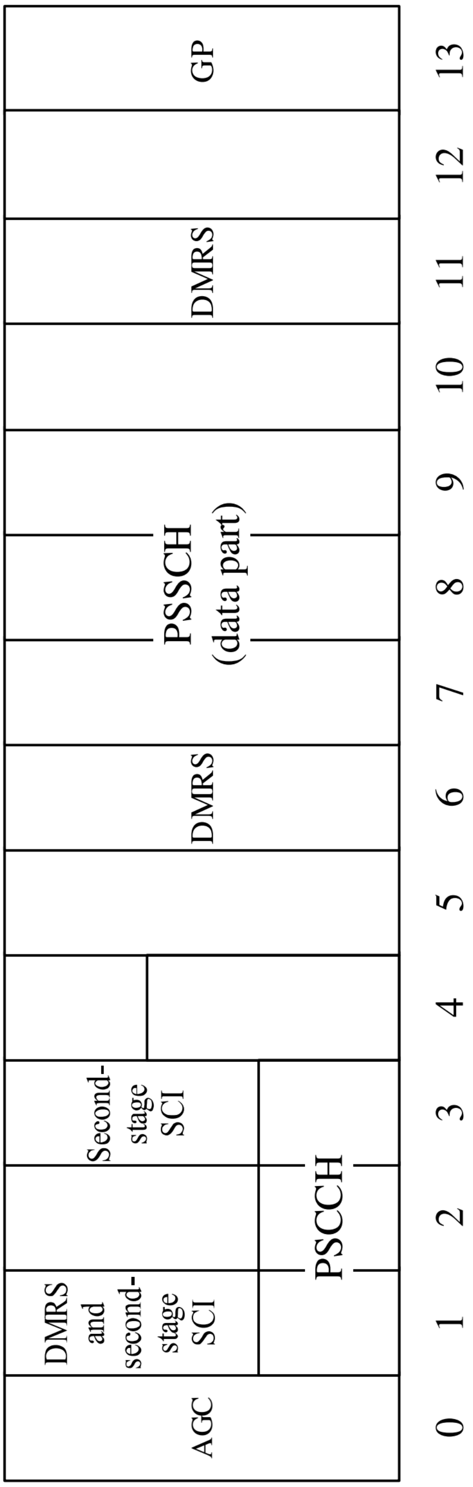
AGC
DMRS and second-stage SCI
PSCCH
Second-stage SCI
DMRS
PSSCH (data part)
DMRS
GP
0
1
2
3
4
5
6
7
8
9
10
11
12
13

FIG. 10

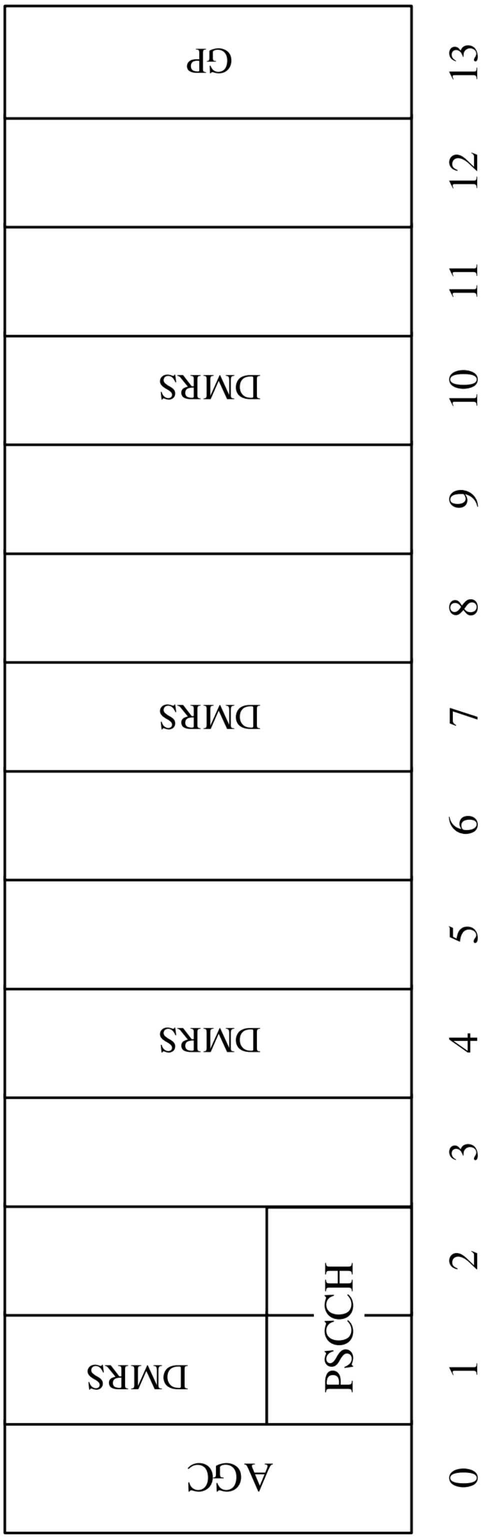


FIG. 11

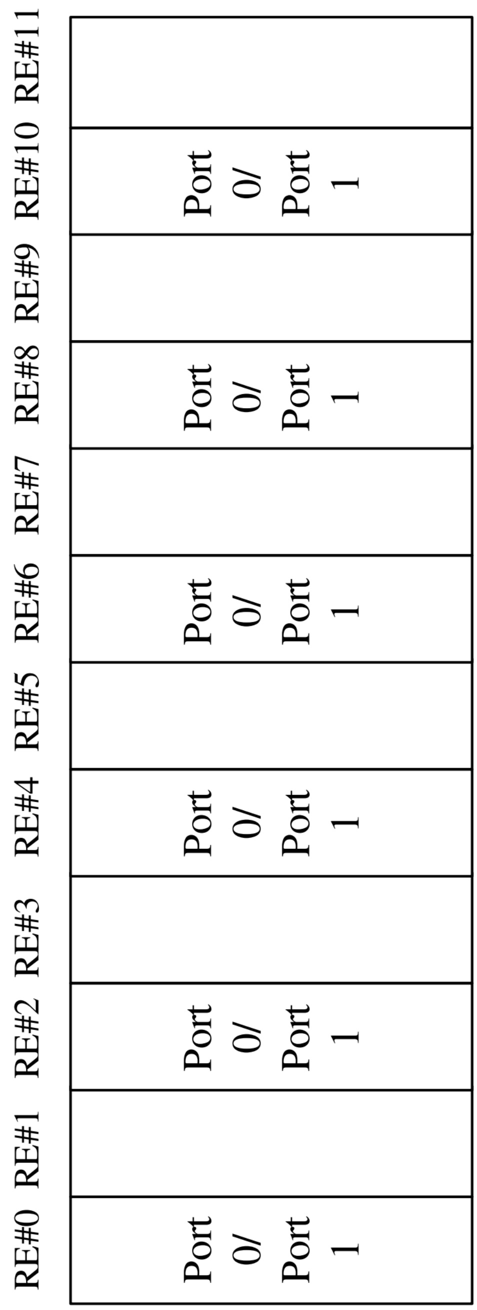
RE#0
RE#1
RE#2
RE#3
RE#4
RE#5
RE#6
RE#7
RE#8
RE#9
RE#10
RE#11
Port 0/ Port 1
Port 0/ Port 1
Port 0/ Port 1
Port 0/ Port 1
Port 0/ Port 1
Port 0/ Port 1

FIG. 12

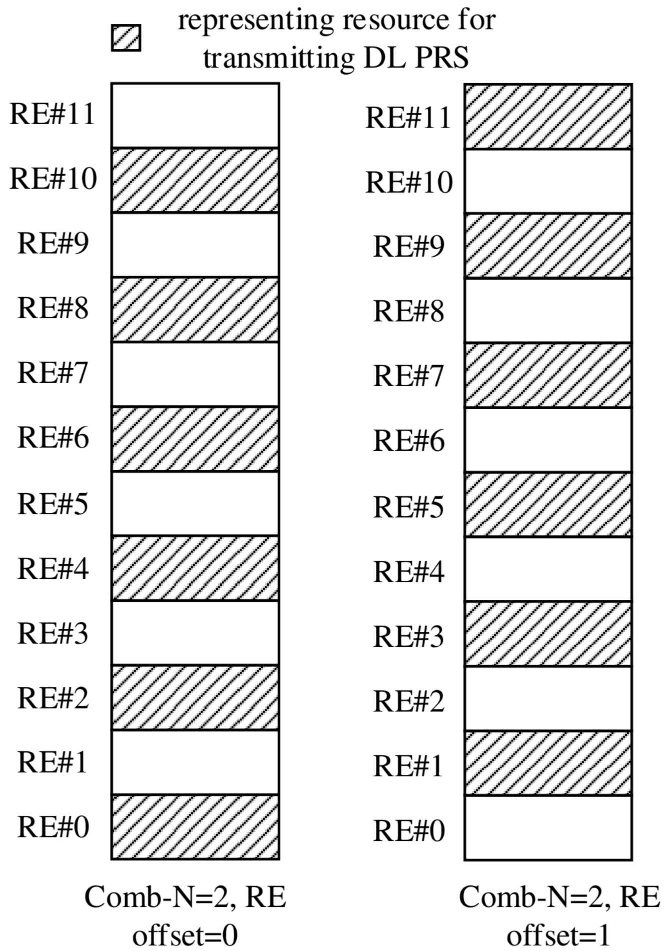
representing resource for transmitting DL PRS
RE#11
RE#10
RE#9
RE#8
RE#7
RE#6
RE#5
RE#4
RE#3
RE#2
RE#1
RE#0
Comb-N=2, RE offset=0
Comb-N=2, RE offset=1

FIG. 13

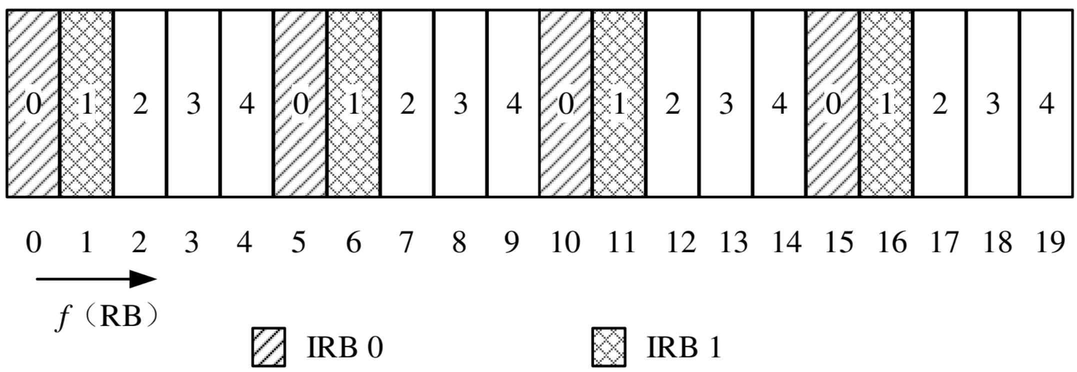
0 1 2 3 4 0 1 2 3 4 0 1 2 3 4 0 1 2 3 4
0 1 2 3 4 5 6 7 8 9 10 11 12 13 14 15 16 17 18 19
f (RB)
IRB 0
IRB 1

FIG. 14

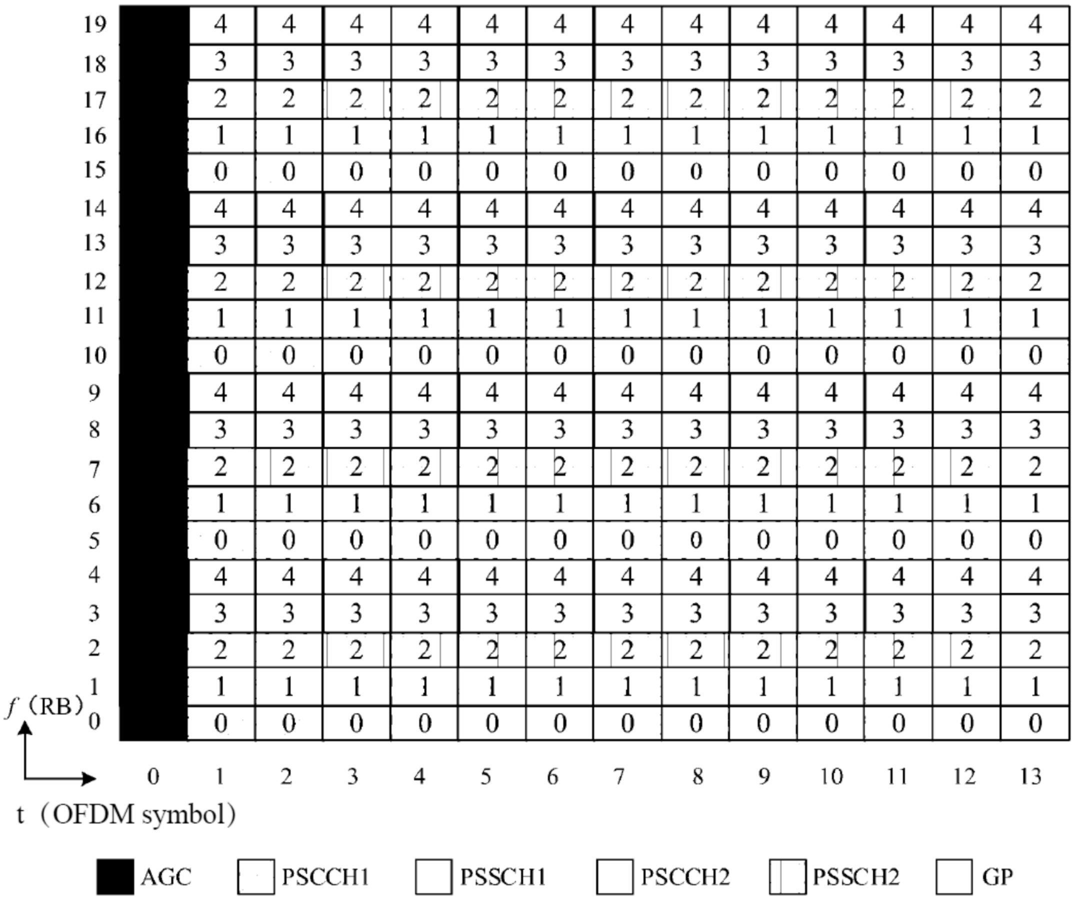
f (RB)
t (OFDM symbol)
AGC
PSCCH1
PSSCH1
PSCCH2
PSSCH2
GP

FIG. 15

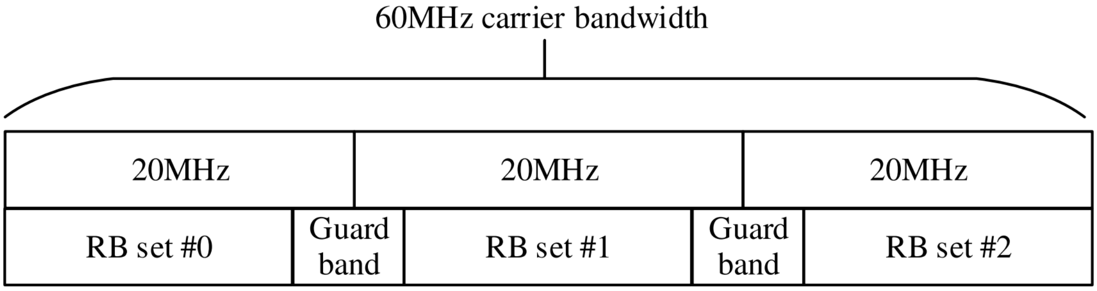
60MHz carrier bandwidth
20MHz
20MHz
20MHz
RB set #0
Guard band
RB set #1
Guard band
RB set #2

FIG. 16

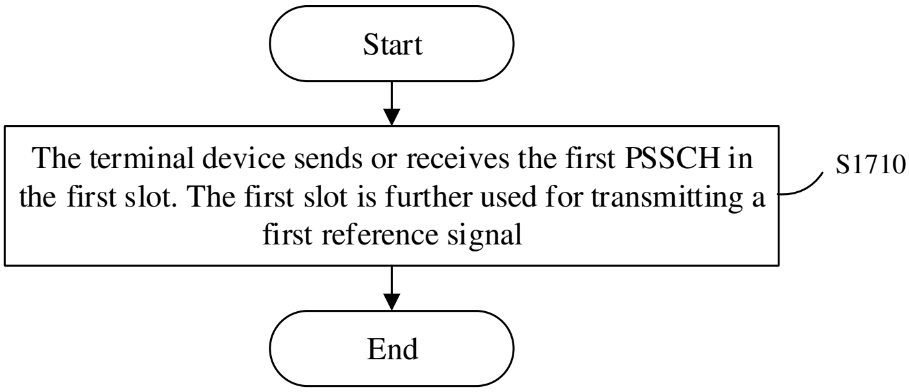


FIG. 17

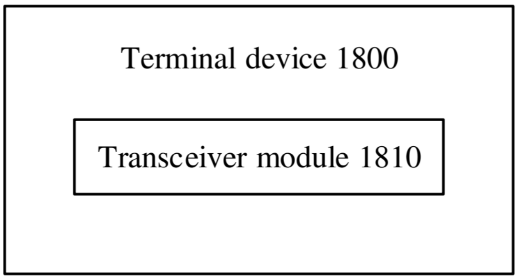


FIG. 18

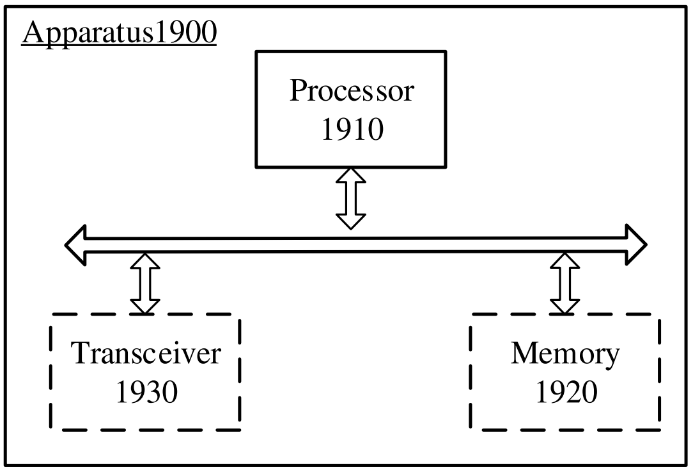


FIG. 19

**INTERNATIONAL SEARCH REPORT**

International application No.
**PCT/CN2023/111226**

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

3GPP; CNTXT; ENTXTC; ENTXT; CNABS: 侧链路, SL, 直通链路, 旁链路, PSSCH, PSCCH, 定位, 参考信号, RS, 第一, 第二, SCI, 参数, 符号数, RE, sidelink, position+, first, second, reference signal, RS, parameter, symbol number

**C. DOCUMENTS CONSIDERED TO BE RELEVANT**

| Category* | Citation of document, with indication, where appropriate, of the relevant passages | Relevant to claim No. |
|---|---|---|
| X | CN 115706627 A (CITIC KEZHILIAN TECHNOLOGY CO., LTD.) 17 February 2023 (2023-02-17)<br>description, paragraphs 285-394, and figures 1-12 | 1-28, 32-76 |
| Y | CN 115706627 A (CITIC KEZHILIAN TECHNOLOGY CO., LTD.) 17 February 2023 (2023-02-17)<br>description, paragraphs 285-394, and figures 1-12 | 29-31 |
| Y | CN 114450910 A (LG ELECTRONICS INC.) 06 May 2022 (2022-05-06)<br>description, paragraphs 149-168 | 29-31 |
| A | CN 115701155 A (VIVO MOBILE COMMUNICATION CO., LTD.) 07 February 2023 (2023-02-07)<br>entire document | 1-76 |
| A | CN 112314006 A (MEDIATEK SINGAPORE PTE. LTD.) 02 February 2021 (2021-02-02)<br>entire document | 1-76 |
| A | US 2022201711 A1 (LG ELECTRONICS INC.) 23 June 2022 (2022-06-23)<br>entire document | 1-76 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 April 2024** | **19 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

## INTERNATIONAL SEARCH REPORT

International application No.
**PCT/CN2023/111226**

**C. DOCUMENTS CONSIDERED TO BE RELEVANT**

| Category* | Citation of document, with indication, where appropriate, of the relevant passages | Relevant to claim No. |
|---|---|---|
| A | INTEL CORP. "R1-1908633, Physical Structure for NR V2X" *3GPP TSG RAN WG1 Meeting #98*, 30 August 2019 (2019-08-30), entire document | 1-76 |

Form PCT/ISA/210 (second sheet) (July 2022)

**INTERNATIONAL SEARCH REPORT**
**Information on patent family members**

International application No.
**PCT/CN2023/111226**

| Patent document cited in search report | | | Publication date (day/month/year) | Patent family member(s) | | | Publication date (day/month/year) |
|---|---|---|---|---|---|---|---|
| CN | 115706627 | A | 17 February 2023 | KR | 20240032066 | A | 08 March 2024 |
| | | | | WO | 2023011347 | A1 | 09 February 2023 |
| CN | 114450910 | A | 06 May 2022 | WO | 2021060953 | A1 | 01 April 2021 |
| | | | | US | 2022217744 | A1 | 07 July 2022 |
| | | | | EP | 4037213 | A1 | 03 August 2022 |
| CN | 115701155 | A | 07 February 2023 | WO | 2023005863 | A1 | 02 February 2023 |
| CN | 112314006 | A | 02 February 2021 | WO | 2020200267 | A1 | 08 October 2020 |
| | | | | US | 2022061041 | A1 | 24 February 2022 |
| US | 2022201711 | A1 | 23 June 2022 | WO | 2020204559 | A1 | 08 October 2020 |
| | | | | KR | 20210114063 | A | 17 September 2021 |

Form PCT/ISA/210 (patent family annex) (July 2022)